# EUROPEAN PATENT APPLICATION

(11) **EP 4 687 364 A2**
(43) Date of publication of application: **04.02.2026**
(21) Application number: 25193021.0
(22) Date of filing: 31.07.2025
(51) Int. Cl.: H04W 36/00

(54) **METHOD OF MOBILITY MANAGEMENT AND DEVICE USING THE SAME**

(30) Priority: 01.08.2024 US 202463678061 P
(71) Applicant: Industrial Technology Research Institute, 310401 Hsinchu (TW)
(72) Inventor: Lin, Jung-Mao, 302 Zhubei City, Hsinchu County (TW); Huang, Nai-Lun, 302 Zhubei City, Hsinchu County (TW)
(74) Representative: Becker Kurig & Partner Patentanwälte mbB

(57) **Abstract**

Methods of mobility management are provided. The method includes: receiving at least one reference configuration identifier and a candidate configuration; generating a complete configuration based on the at least one reference configuration identifier and the candidate configuration; and applying the complete configuration to perform a cell switch to a candidate network node corresponding to the candidate configuration.

## Description

### BACKGROUND

### Technical Field

The disclosure is directed to methods of mobility management suitable for a user equipment (UE), a source network node, and a network system.

### Description of Related Art

Layer 1 (L1)/Layer 2 (L2) triggered mobility (LTM) is introduced in Release 18 (Rel-18) of 3rd Generation Partnership Project (3GPP). In the Rel-18 LTM framework, the reference configuration (RC) within the LTM configuration (LTM-config) is introduced to reduce the signaling overhead caused by candidate configurations (CCs) within LTM-candidate for multiple candidate cells. In Rel-18, only one reference configuration needs to be configured for intra-centralized unit (intra-CU) LTM. However, in Release 19 (Rel-19) inter-centralized unit (inter-CU) LTM, the radio bearer configuration or measurement configuration are likely to differ across centralized units (CUs). Improving signaling efficiency for inter-centralized unit (inter-CU) LTM therefore becomes a key challenge in this area.

### SUMMARY

The disclosure is directed to a method of mobility management suitable for a UE, a source network node, and a network system.

The present disclosure is directed to a method of mobility management suitable for a user equipment (UE). The method includes: receiving at least one reference configuration identifier and a candidate configuration; generating a complete configuration based on the at least one reference configuration identifier and the candidate configuration; and applying the complete configuration to perform a cell switch to a candidate network node corresponding to the candidate configuration.

In one embodiment of the present disclosure, the candidate configuration comprises a delta configuration with respect to the at least one reference configuration identifier.

In one embodiment of the present disclosure, the method further includes: obtaining a reference configuration corresponding to the at least one reference configuration identifier; considering the reference configuration is a current UE configuration; and applying the delta configuration to obtain the complete configuration.

In one embodiment of the present disclosure, the complete configuration comprises at least one of the following: a measurement configuration, mobility control information, a radio resource control (RRC) configuration, a packet data convergence protocol (PDCP) configuration, a radio link control (RLC) configuration, a medium access control (MAC) configuration, a physical layer (PHY) configuration, or a security configuration.

In one embodiment of the present disclosure, the at least one reference configuration identifier is received via a mobility configuration message or a cell switch command corresponding to the candidate network node.

In one embodiment of the present disclosure, the at least one reference configuration identifier corresponds to a home reference configuration associated with a plurality of candidate network nodes of the UE and a candidate reference configuration associated with a part of the plurality of candidate network nodes, wherein the complete configuration is generated by combining the home reference configuration, the candidate reference configuration, and the candidate configuration.

In one embodiment of the present disclosure, the method further includes: selecting a reference configuration identifier corresponding to the candidate network node from the at least one reference configuration identifier, wherein the complete configuration is generated based on the reference configuration identifier and the candidate configuration.

In one embodiment of the present disclosure, the method further includes: receiving a configuration and determining whether a parameter is included in the configuration; and in response to the parameter being included in the configuration, generating the complete configuration based on the reference configuration identifier and the candidate configuration.

In one embodiment of the present disclosure, the complete configuration is applied by the UE in response to a conditional trigger event associated with a mobility operation, wherein the conditional trigger event comprises at least one of the following: a conditional handover (CHO), a conditional lower-layer triggered mobility (C-LTM), or a conditional policy-assisted configuration (CPAC).

In one embodiment of the present disclosure, the step of generating the complete configuration based on the at least one reference configuration identifier and the candidate configuration comprises: obtaining a reference configuration corresponding to the at least one reference configuration identifier, wherein the reference configuration is pre-configured to the UE; and combining the reference configuration and the candidate configuration to generate the complete configuration.

In one embodiment of the present disclosure, the at least one reference configuration identifier and the candidate configuration are received via a lower-layer triggered configuration or a handover configuration.

The present disclosure is directed to a method of mobility management suitable for a source network node. The method includes: generating a reference configuration; transmitting the reference configuration to a candidate network node; receiving a candidate configuration and an indicator from the candidate network node; generating a mobility configuration message based on the reference configuration, the candidate configuration, and the indicator; and transmitting the mobility configuration message to a user equipment (UE).

The present disclosure is directed to a method of mobility management suitable for a network system. The method includes: generating a reference configuration by a source network node of the network system; generating a candidate configuration by a candidate network node of the network system, wherein the candidate configuration is transmitted from the candidate network node to the source network node; and transmitting the reference configuration and the candidate configuration to a user equipment (UE) of the network system by the source network node.

In one embodiment of the present disclosure, the method further includes: combining the reference configuration and the candidate configuration to generate a complete configuration by the UE; and applying the complete configuration to perform a cell switch to the candidate network node by the UE.

In one embodiment of the present disclosure, the candidate configuration is generated by the candidate network node based on the reference configuration.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a schematic diagram of LTM procedure according to one embodiment of the present disclosure.
FIG. 2 illustrates a schematic diagram of LTM-config according to one embodiment of the present disclosure.
FIG. 3 illustrates a schematic diagram of signaling overhead of candidate configurations according to one embodiment of the present disclosure.
FIG. 4 illustrates a schematic diagram of commonality of CCs between different candidate cells according to one embodiment of the present disclosure.
FIG. 5 is a flowchart of generating a full CC according to one embodiment of the present disclosure.
FIG. 6 illustrates a schematic diagram of intra-CU LTM according to one embodiment of the present disclosure.
FIG. 7 illustrates a schematic diagram of inter-CU LTM according to one embodiment of the present disclosure.
FIG. 8 illustrates a schematic diagram of RC scheme according to one embodiment of the present disclosure.
FIG. 9 illustrates a schematic diagram of M-RC scheme according to one embodiment of the present disclosure.
FIG. 10 illustrates a schematic diagram of the configuration model of M-RC according to one embodiment of the present disclosure.
FIG. 11 illustrates a flowchart of generating a full CC according to one embodiment of the present disclosure.
FIG. 12 illustrates a signaling diagram of cell switch according to one embodiment of the present disclosure.
FIG. 13 illustrates a schematic diagram of LTM recovery triggered by radio link failure (RLF) according to one embodiment of the present disclosure.
FIG. 14 illustrates a schematic diagram of LTM recovery triggered by cell switch failure according to one embodiment of the present disclosure.
FIG. 15 illustrates a signaling diagram of configuration procedure after the LTM recovery according to one embodiment of the present disclosure.
FIG. 16 illustrates a signaling diagram of generating reference configurations and candidate configurations according to one embodiment of the present disclosure.
FIG. 17 illustrates a signaling diagram of generating a RC according to one embodiment of the present disclosure.
FIG. 18 illustrates a signaling diagram of generating a RC according to one embodiment of the present disclosure.
FIG. 19 illustrates a signaling diagram of generating a M-RC and CCs according to one embodiment of the present disclosure.
FIG. 20 illustrates a signaling diagram of generating a M-RC and CCs according to one embodiment of the present disclosure.
FIG. 21 illustrates a signaling diagram of generating a RC and CCs according to one embodiment of the present disclosure.
FIG. 22 illustrates a signaling diagram of generating RCs and CCs according to one embodiment of the present disclosure.
FIG. 23 illustrates a signaling diagram of generating a RC and CCs according to one embodiment of the present disclosure.
FIG. 24 illustrates a signaling diagram of generating a RC and CCs according to one embodiment of the present disclosure.
FIG. 25 illustrates a signaling diagram of generating a RC and CCs according to one embodiment of the present disclosure.
FIG. 26 illustrates a schematic diagram of LTM-config according to one embodiment of the present disclosure.
FIG. 27 illustrates a schematic diagram of configuration scheme according to one embodiment of the present disclosure.
FIG. 28 illustrates a flowchart of generating a full CC according to one embodiment of the present disclosure.
FIG. 29 illustrates a flowchart of generating a full CC according to one embodiment of the present disclosure.
FIG. 30 illustrates a signaling diagram of cell switch according to one embodiment of the present disclosure.
FIG. 31 illustrates a signaling diagram of generating a HR and a CR list according to one embodiment of the present disclosure.
FIG. 32 illustrates a signaling diagram of generating a HR and a CR list according to one embodiment of the present disclosure.
FIG. 33 illustrates a signaling diagram of generating a HR and a CR list according to one embodiment of the present disclosure.
FIG. 34 illustrates a signaling diagram of generating a HR and a CR list according to one embodiment of the present disclosure.
FIG. 35 illustrates a signaling diagram of generating a HR and a CR list according to one embodiment of the present disclosure.
FIG. 36 illustrates a schematic diagram of LTM-config according to one embodiment of the present disclosure.
FIG. 37 illustrates a flowchart of generating a full CC according to one embodiment of the present disclosure.
FIG. 38 illustrates a signaling diagram of cell switch according to one embodiment of the present disclosure.
FIG. 39 illustrates a schematic diagram of HO-config according to one embodiment of the present disclosure.
FIG. 40 illustrates a flowchart of generating a full CC according to one embodiment of the present disclosure.
FIG. 41 illustrates a signaling diagram of generating reference configurations according to one embodiment of the present disclosure.
FIG. 42 illustrates a signaling diagram of generating RCs and CCs according to one embodiment of the present disclosure.
FIG. 43 illustrates a signaling diagram of generating RCs and CCs according to one embodiment of the present disclosure.
FIG. 44 illustrates a schematic diagram of HO-config according to one embodiment of the present disclosure.
FIG. 45 illustrates a flowchart of generating a full CC according to one embodiment of the present disclosure.
FIG. 46 illustrates a flowchart of generating a full CC according to one embodiment of the present disclosure.
FIG. 47 illustrates a schematic diagram of conditional-config according to one embodiment of the present disclosure.
FIG. 48 illustrates a flowchart of generating a full CC according to one embodiment of the present disclosure.
FIG. 49 illustrates a signaling diagram of generating reference configurations according to one embodiment of the present disclosure.
FIG. 50 illustrates a signaling diagram of triggering CHO, C-LTM, or CPAC according to one embodiment of the present disclosure.
FIG. 51 illustrates a signaling diagram of generating RCs and CCs according to one embodiment of the present disclosure.
FIG. 52 illustrates a signaling diagram of generating RCs and CCs according to one embodiment of the present disclosure.
FIG. 53 illustrates a schematic diagram of conditional-config according to one embodiment of the present disclosure.
FIG. 54 illustrates a schematic diagram of configuration scheme according to one embodiment of the present disclosure.
FIG. 55 illustrates a flowchart of generating a full CC according to one embodiment of the present disclosure.
FIG. 56 illustrates a flowchart of generating a full CC according to one embodiment of the present disclosure.
FIG. 57 illustrates a flowchart or a method of mobility management according to one embodiment of the present disclosure.
FIG. 58 illustrates a flowchart of a method of mobility management according to one embodiment of the present disclosure.
FIG. 59 illustrates a flowchart of a method of mobility management according to one embodiment of the present disclosure.
FIG. 60 illustrates a schematic diagram of a communication device according to one embodiment of the present disclosure.

### DESCRIPTION OF THE EMBODIMENTS

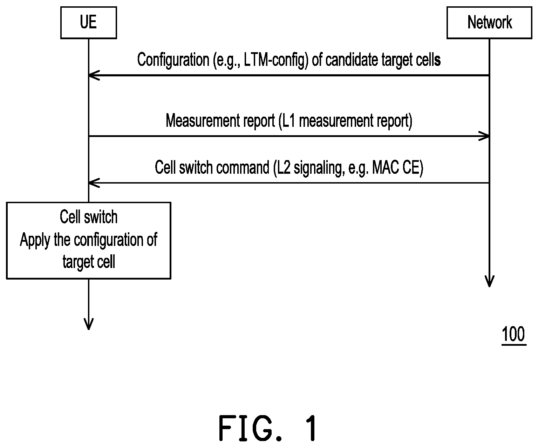

FIG. 1 illustrates a schematic diagram 100 of LTM procedure according to one embodiment of the present disclosure. A network (also referred to as a network node, a base station (BS), a gNB, a CU, or a cell) may transmit a configuration (e.g., LTM-config) of one or more candidate cells to a UE, wherein the configuration may at least carry the information including the configuration of each candidate target cell. The configuration may provide a configuration scheme to reduce the configuration overhead by reducing the redundant information for inter-CU LTM. In response to the configuration, the UE may transmit a measurement report (e.g., L1 measurement report) to the network. Based on the measurement report, the network may transmit a cell switch command (L2 signaling, e.g., a medium access control (MAC) control element (CE)) to the UE for switching to a target cell. The cell switch command may at least carry the information including the information related to a target cell identifier (ID). After receiving the cell switch command, the UE may perform a cell switch to the target cell corresponding to the target cell ID information by applying the configuration of the target cell.

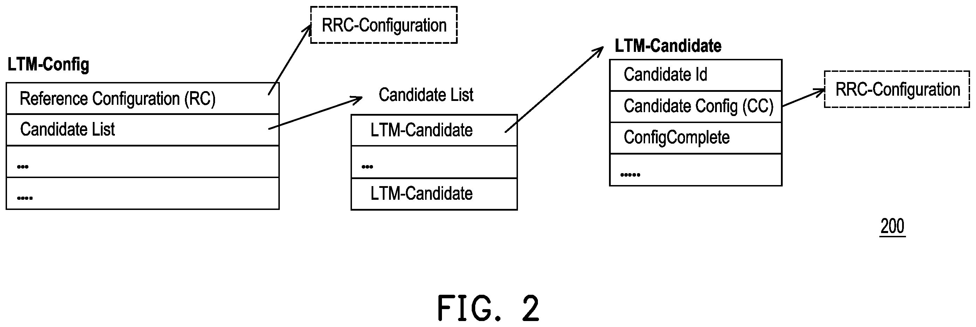

In Rel-18 LTM framework, the reference configuration (RC) within LTM-config is introduced to reduce the signaling overhead of the candidate configuration (CC) among multiple candidate cells. FIG. 2 illustrates a schematic diagram 200 of LTM-config according to one embodiment of the present disclosure. The LTM-config may include a RC and a candidate list. The RC may include a radio resource control (RRC) configuration, wherein the RRC-configuration may include information for measurement configuration, mobility control, radio resource configuration (including radio bearer (RB), MAC main configuration, or physical channel configuration), or security configuration. The candidate list may include one or more LTM-candidates, wherein each LTM-candidate is corresponded to a candidate cell for LTM. The LTM-candidate may include information such as a candidate ID (e.g., a candidate cell ID), a CC, or a configuration complete message (*ConfigComplete*). In one embodiment, the LTM-config may be carried by a cell switch command.

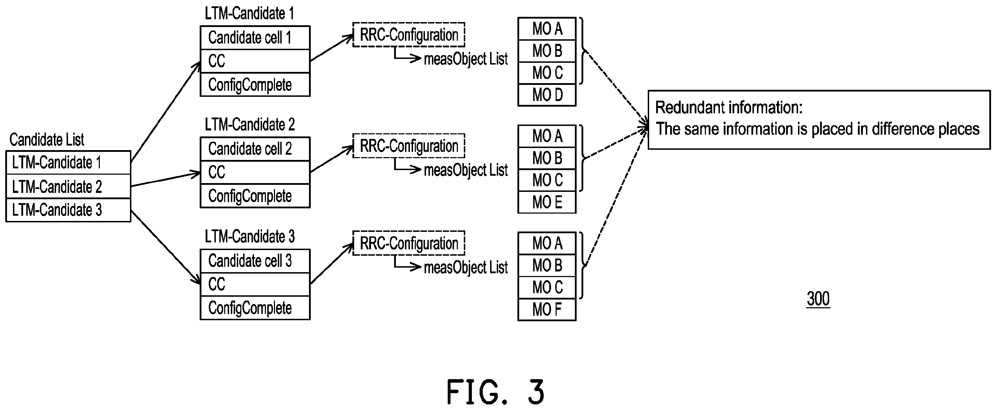

FIG. 3 illustrates a schematic diagram 300 of signaling overhead of candidate configurations according to one embodiment of the present disclosure. Assume that the candidate list includes LTM-candidate 1, LTM-candidate 2, and LTM-candidate 3, wherein each LTM-candidate may include a candidate cell ID (e.g., candidate cell 1, candidate cell 2, or candidate cell 3), a CC, and a *ConfigComplete.* Each CC may include configurations (e.g., *measObject List*) of one or more measurement objectives (MO) to be measured. If candidate cell 1 wants to configure MO A, MO B, MO C, and MO D to the UE, candidate cell 2 wants to configure MO A, MO B, MO C, and MO E to the UE, and candidate cell 3 wants to configure MO A, MO B, MO C, and MO F to the UE, MO A, MO B, and MO C would be redundant information within the candidate list.

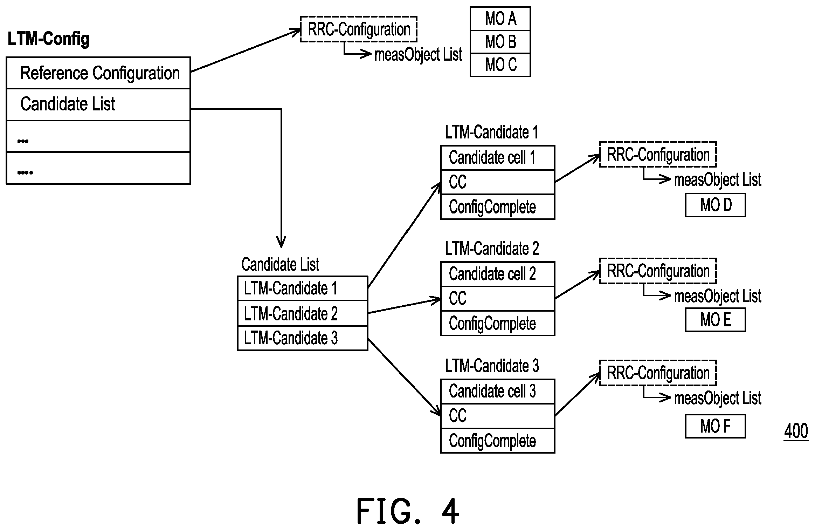

In order to reduce the signaling overhead for CCs, the RC may carry the commonality of CCs between different candidate cells. The same information may not need to be placed in different places of the candidate list, and the signaling overhead can be reduced accordingly. FIG. 4 illustrates a schematic diagram 400 of commonality of CCs between different candidate cells according to one embodiment of the present disclosure. Assume that candidate cell 1 wants to configure MO A, MO B, MO C, and MO D to the UE, candidate cell 2 wants to configure MO A, MO B, MO C, and MO E to the UE, and candidate cell 3 wants to configure MO A, MO B, MO C, and MO F to the UE, as shown in FIG. 3. Since MO A, MO B, and MO C are common between different candidate cell, MO A, MO B, and MO C may be included in the RC. For example, the RC (or *measObject List* in the RC) may include MO A, MO B, and MO C. MO A, MO B, and MO C may be removed from the CC (or *measObject List* in the CC) of each LTM-candidate.

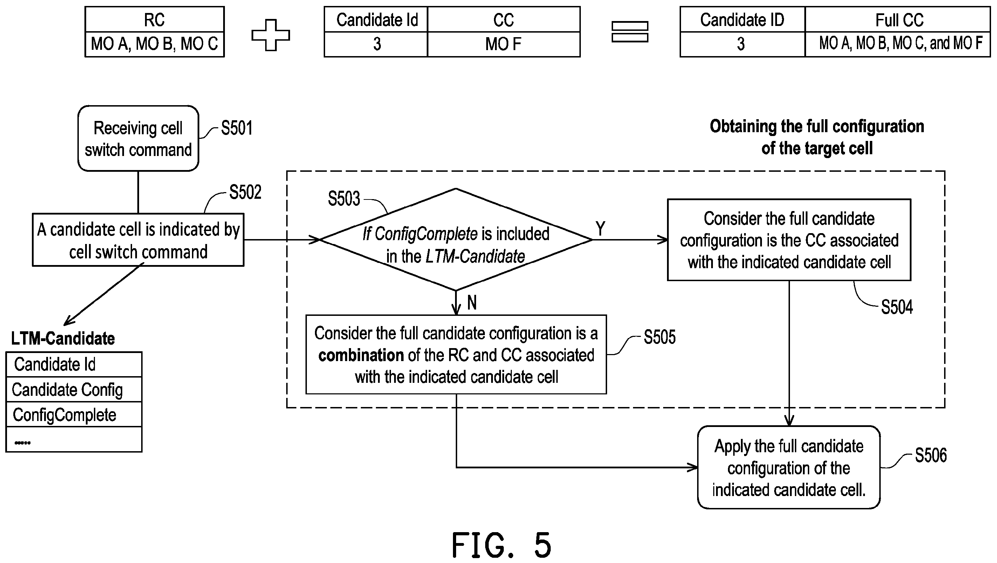

A UE may combine a RC with a CC to generate a full CC (also referred to as a complete configuration). FIG. 5 is a flowchart of generating a full CC according to one embodiment of the present disclosure. In step S501, the UE may receive a cell switch command from the network. In step S502, the UE may determine a candidate cell indicated by the cell switch command (or indicated by the LTM-candidate in the cell switch command). In step S503, the UE may determine whether *ConfigComplete* is included in the LTM-candidate. If *ConfigComplete* is included in the LTM-candidate, the UE may execute step S504. If *ConfigComplete* is not included in the LTM-candidate, the UE may execute step S505.

In step S504, the UE may consider the full candidate configuration is the CC associated with the indicated candidate cell. The UE may generate the full CC by using only the CC. In step S505, the UE may consider the full candidate configuration is a combination of the RC and the CC associated with the indicated candidate cell. The UE may generate the full CC by combining the RC with the CC associated with the indicated candidate cell. For example, if the target cell is candidate cell 3 in FIG. 4, the UE may combine the RC (e.g., MO A, MO B, and MO C) with the CC (e.g., MO F) corresponding to the candidate cell 3. Therefore, the UE may obtain the full CC including configurations of MO A, MO B, MO C, and MO F. In step S506, the UE may apply the full CC of the indicated candidate cell to perform a cell switch to the indicated candidate cell.

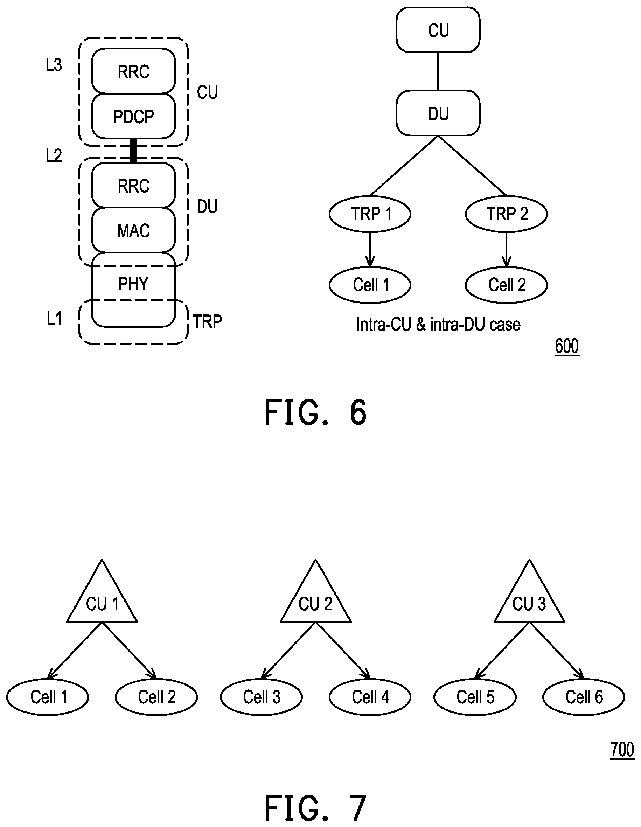

In Rel-18, only one reference configuration is configured for intra-CU LTM. Since there is only one CU involved in the LTM, one RC is sufficient in the intra-CU LTM. FIG. 6 illustrates a schematic diagram 600 of intra-CU LTM according to one embodiment of the present disclosure. A CU may represent the layer 3 (L3) of a communication system, including an RRC entity and a packet data convergence protocol (PDCP) entity. A distributed unit (DU) may represent the layer 2 (L2) of the communication system, including a radio link control (RLC) entity and a MAC entity. A transmission/reception point (TRP) may represent the layer 1 (L1) of the communication system, including a physical layer (PHY) entity. Since cell 1 and cell 2 share the same CU, similar MOs may be needed for cell 1 and cell 2. The CU may configure the information for measurement configuration, mobility control information, RRC configuration, PDCP configuration, RLC configuration, MAC configuration, PHY configuration, or security configuration.

For inter-CU LTM, the radio bearer configuration and/or measurement configuration may not be the same between different CUs. The commonality of candidate cell configurations between different CUs may be very small. Taking an MO as an example, even for the same neighbor cell, different CUs may configure different parameters (e.g., *nrofSS-BlocksToAverage* or *nrofCSI-RS-ResourcesToAverage* configured by each CU) to form different MOs. Therefore, for some kinds of configuration, the reference configuration may share limited commonalities and most of the configurations are different and provided via a candidate configuration (CC) within an LTM-candidate. FIG. 7 illustrates a schematic diagram 700 of inter-CU LTM according to one embodiment of the present disclosure. Cell 1 and cell 2, cell 3 and cell 4, and cell 5 and cell 6 belong to CU 1, CU 2, and CU 3 respectively.

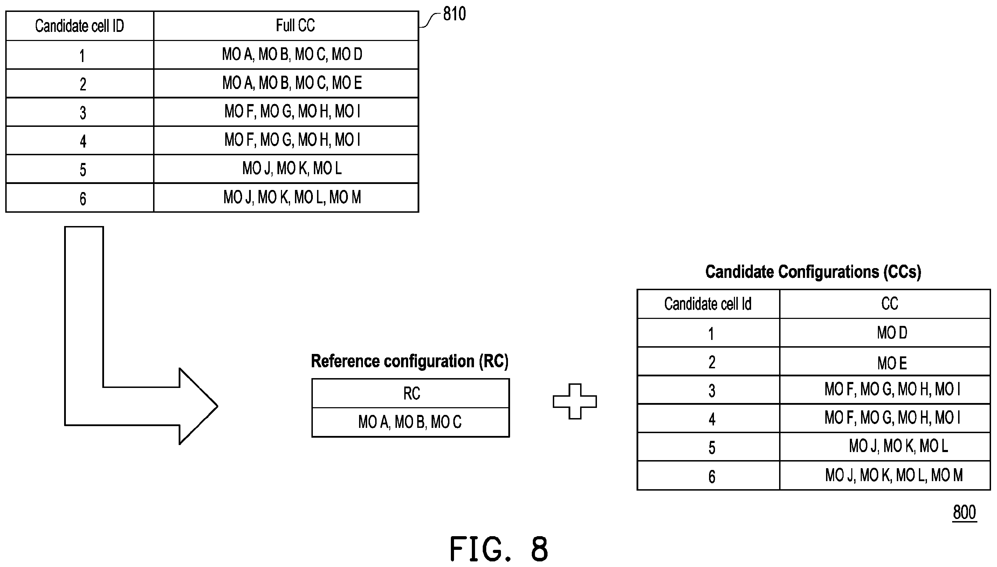

FIG. 8 illustrates a schematic diagram 800 of RC scheme according to one embodiment of the present disclosure. Assume that the candidate cell 1-6 want to configure MOs as table 810. That is, the full CC of candidate cell 1 includes MO A, MO B, MO C, and MO D. The full CC of candidate cell 2 includes MO A, MO B, MO C, and MO E. The full CC of the candidate cell 3 includes MO F, MO G, MO H, and MO I. The full CC of the candidate cell 4 includes MO F, MO G, MO H, and MO I. The full CC of the candidate cell 5 includes MO J, MO K, and MO L. The full CC of the candidate cell 6 includes MO J, MO K, MO L, and MO M. The MOs may be divided into an RC and a plurality of CCs, wherein each CC corresponds to a candidate cell. Redundant information may be carried in the LTM-config. For example, MO F, MO G, MO H, or MO I may be configured in both the CC of the candidate cell 3 and the CC of the candidate cell 4. MO J, MO K, or MO L may be configured in both the CC of the candidate cell 5 and the CC of the candidate cell 6.

To enjoy the benefit in signaling efficiency from using the RC scheme while avoiding complicated network signalings, multiple reference configurations (M-RC) may be configured to the network system. For example, M-RC (e.g., M-RC with multiple RC-IDs) or one or more CCs may be configured to a UE via a cell switch command or a mobility configuration message (e.g., LTM-config, handover (HO) command, or lower-layer triggered configuration). The MOs for one or more candidate cells may be divided into M-RC and the CCs, wherein each CC corresponds to a candidate cell.

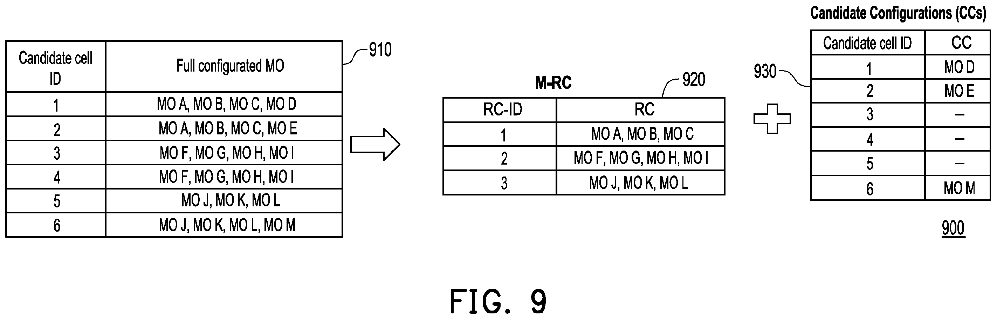

FIG. 9 illustrates a schematic diagram 900 of M-RC scheme according to one embodiment of the present disclosure. Assume that the candidate cell 1-6 want to configure MOs as table 910. That is, the full CC of candidate cell 1 includes MO A, MO B, MO C, and MO D. The full CC of candidate cell 2 includes MO A, MO B, MO C, and MO E. The full CC of the candidate cell 3 includes MO F, MO G, MO H, and MO I. The full CC of the candidate cell 4 includes MO F, MO G, MO H, and MO I. The full CC of the candidate cell 5 includes MO J, MO K, and MO L. The full CC of the candidate cell 6 includes MO J, MO K, MO L, and MO M. The MO may be divided into M-RC and one or more CCs. The M-RC may include RCs corresponding to RC-ID 1, RC-ID 2, and RC-ID 3 respectively, as shown in table 920. The RC corresponding to RC-ID 1 may include MO A, MO B, and MO C. The RC corresponding to RC-ID 2 may include MO F, MO G, MO H, and MO I. The RC corresponding to RC-ID 3 may include MO J, MO k, and MO L. The one or more CCs may include the CC corresponding to candidate cell ID 1, the CC corresponding to candidate cell ID 2, and the CC corresponding to candidate cell ID 6, as shown in table 930. The CC corresponding to candidate cell ID 1 may include MO D. The CC corresponding to candidate cell ID 2 may include MO E. The CC corresponding to candidate cell ID 6 may include MO M.

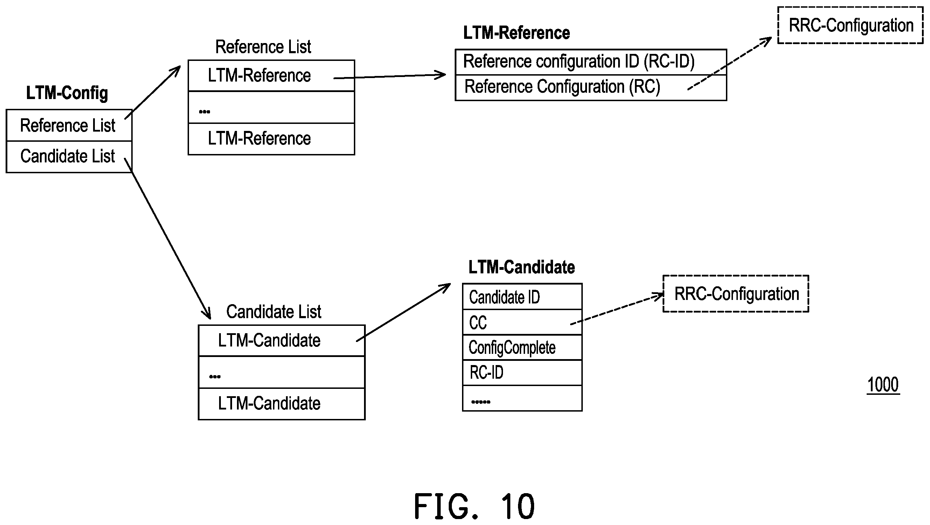

FIG. 10 illustrates a schematic diagram 1000 of the configuration model of M-RC according to one embodiment of the present disclosure. An LTM-config may include a reference list (e.g., RC list, RC-ID list) and a candidate list (e.g., CC list). The reference list may include one or more LTM references, and each LTM reference may include an RC or an RC-ID. The candidate list may include one or more LTM candidates, wherein each LTM candidate may include a candidate ID, a CC, a *ConfigComplete,* or an RC-ID.

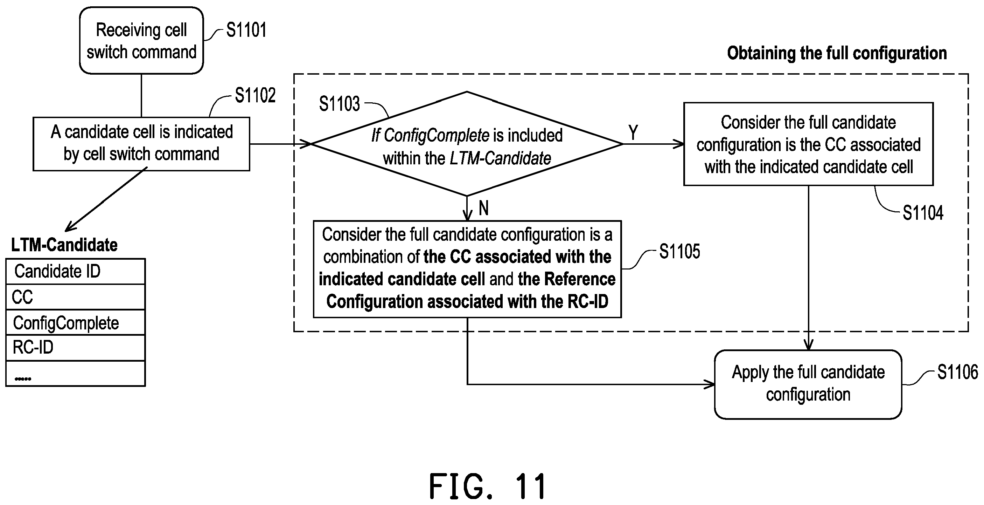

In one embodiment, an RC-ID may be included in a configuration of LTM-candidate. FIG. 11 illustrates a flowchart of generating a full CC according to one embodiment of the present disclosure. In step S1101, the UE may receive a cell switch command from the network. In step S1102, the UE may determine a candidate cell indicated by the cell switch command (i.e., indicated by the LTM-candidate in the cell switch command). In step S1103, the UE may determine whether *ConfigComplete* is included in the LTM-candidate. If *ConfigComplete* is included in the LTM-candidate, the UE may execute step S1104. If *ConfigComplete* is not included in the LTM-candidate, the UE may execute step S1105.

In step S1104, the UE may consider the full candidate configuration is the CC associated with the indicated candidate cell. The UE may generate the full CC by using only the CC. In step S1105, the UE may consider the full candidate configuration is a combination of the CC associated with the indicated candidate cell and the RC associated with the RC-ID. The UE may generate the full CC by combining the RC with the CC associated with the indicated candidate cell. One of the combining methods may be that the UE may consider the CC as the current UE configuration, and apply the RC associated with the RC-ID. In step S1106, the UE may apply the full CC of the indicated candidate cell to perform a cell switch to the indicated candidate cell.

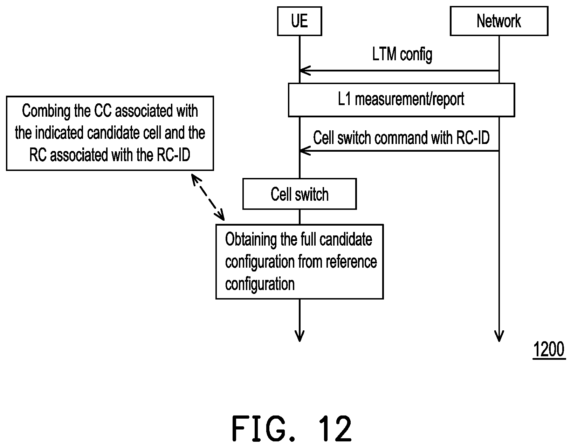

In one embodiment, an RC-ID may be included in a cell switch command. FIG. 12 illustrates a signaling diagram 1200 of cell switch according to one embodiment of the present disclosure. The network may transmit an LTM-config to the UE. The UE may perform channel measurement (e.g., L1 measurement or L3 measurement) according to the LTM-config and may report the measurement result to the network. Based on the measurement result, the network may instruct the UE to perform cell switch by transmitting a cell switch command with an RC-ID to the UE. After receiving the cell switch command, the UE may perform cell switch and obtain a full CC from a reference configuration. Specifically, the UE may combine the CC associated with the indicated candidate cell with the RC associated with the RC-ID to generate the full CC. One of the combining methods may be that the UE may consider the CC as the current UE configuration, and apply the RC associated with the RC-ID.

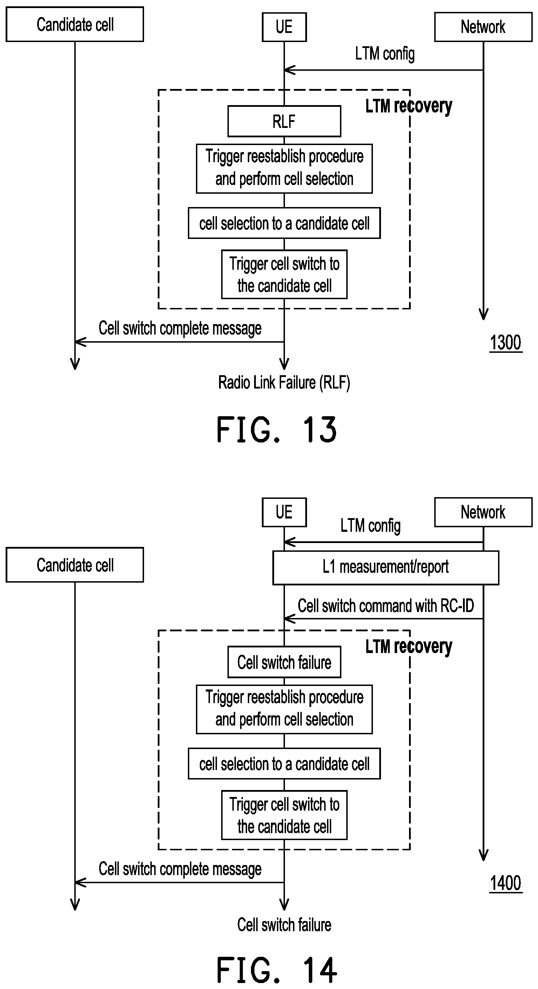

In one embodiment, the UE may not obtain a RC-ID if an LTM recovery occurs. FIG. 13 illustrates a schematic diagram 1300 of LTM recovery triggered by radio link failure (RLF) according to one embodiment of the present disclosure. After UE receiving the LTM configuration, if an RLF occurs, the UE may trigger a reestablish procedure and perform cell selection to select a suitable cell. If the suitable cell is a candidate cell which is configured by the LTM configuration, the UE will perform LTM recovery and trigger cell switch to the candidate cell. The UE may transmit a cell switch complete message to the candidate cell when the UE performing cell switch to the candidate cell. Based on the above, the UE may trigger cell switch without receiving a cell switch command from the network.

FIG. **14** illustrates a schematic diagram 1400 of LTM recovery triggered by cell switch failure according to one embodiment of the present disclosure. The network may transmit an LTM-config to the UE. The UE may perform channel measurement (e.g., L1 measurement or L3 measurement) according to the LTM-config and may report the measurement result to the network. Based on the measurement result, the network may instruct the UE to perform cell switch by transmitting a cell switch command with an RC-ID to the UE. After receiving the cell switch command, the UE may perform cell switch to a candidate cell indicated by the cell switch command. If the cell switch failure occurs, the UE may trigger a reestablish procedure and perform cell selection to select a suitable cell. If the candidate cell is selected as the suitable cell, the UE may trigger cell switch to the candidate cell, wherein said candidate cell may be the same as or different from the candidate cell indicated by the cell switch command. The UE may transmit a cell switch complete message to the candidate cell when the UE performing cell switch to the candidate cell successfully.

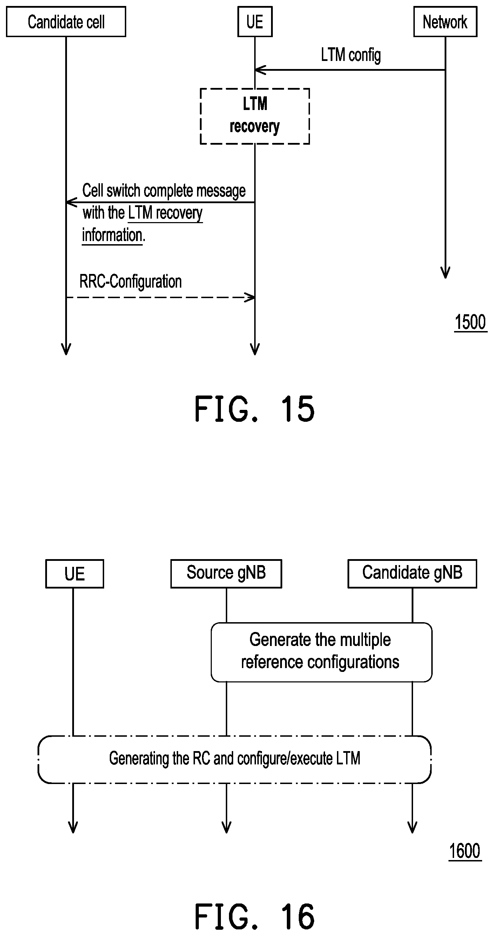

FIG. 15 illustrates a signaling diagram 1500 of configuration procedure after the LTM recovery according to one embodiment of the present disclosure. In order to obtain the full candidate configuration when the LTM recovery is triggered, the LTM recovery procedure needs to be enhanced. After performing the cell switch to a candidate cell successfully, the UE may inform the candidate cell that the cell switch is triggered due to LTM recovery by transmitting the LTM recovery information to the candidate cell. The LTM recovery information can be carried by a cell switch complete message or a control message. After receiving the LTM recovery information, the candidate cell may configure the related configuration to the UE. For example, the candidate cell may transmit an RRC configuration message to the UE to configure the related configuration for the UE.

FIG. 16 illustrates a signaling diagram 1600 of generating reference configurations and candidate configurations according to one embodiment of the present disclosure. Multiple reference configurations (M-RC) may be generated by a source gNB and one or more candidate gNBs. In one embodiment, the one or more candidate gNBs may generate the M-RC and the CCs. In one embodiment, the source gNB may provide information to the one or more candidate gNBs. The one or more candidate gNBs may generate the M-RC and the CCs according to the information. On the other hand, the RC for executing LTM may be generated by the UE, the source gNB, or one or more candidate gNBs. In on embodiment, an RC-ID may be included in an LTM-candidate (or an LTM-config) transmitted to the UE. The UE may determine the RC for executing LTM according to the RC-ID. In one embodiment, an RC-ID may be included in a cell switch command transmitted to the UE. The UE may determine the RC for executing LTM according to the RC-ID.

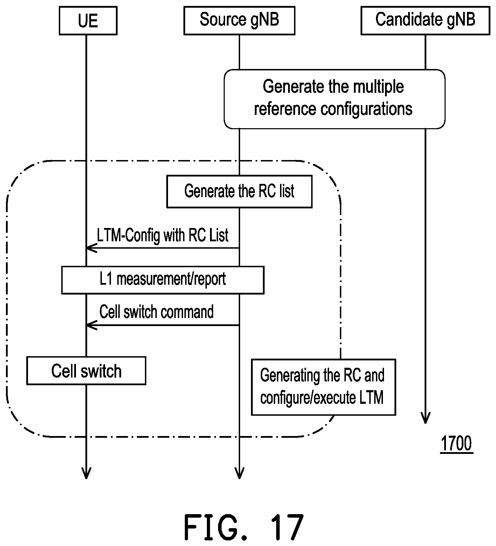

FIG. 17 illustrates a signaling diagram 1700 of generating a RC according to one embodiment of the present disclosure. After multiple reference configurations are generated, the source gNB may generate a RC list including the multiple reference configurations. The source gNB may transmit the RC list to the UE via an LTM-config (or LTM-candidate in the LTM-config), wherein one or more reference configurations for one or more candidate gNBs may be included in the RC list. Furthermore, one or more RC-ID for the one or more candidate gNBs may be included in the LTM-config. That is, the mapping relationship between each RC-ID and each candidate gNB is known to the UE. After receiving a cell switch command indicating a candidate gNB from the source gNB, the UE may select an RC corresponding to the candidate gNB from the RC list and generate the full candidate configuration based on the selected RC. The UE may apply the full candidate configurations to perform cell switch to the candidate gNB.

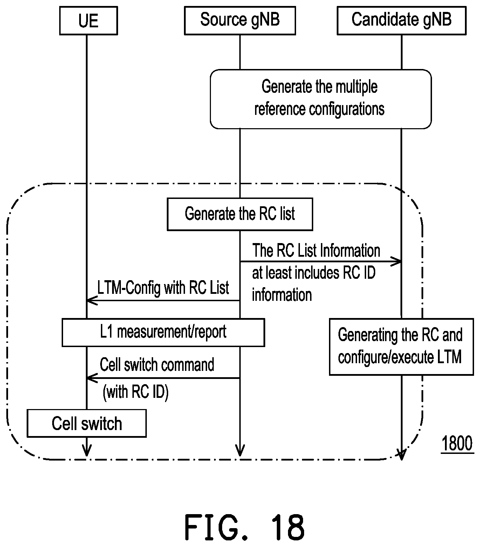

FIG. 18 illustrates a signaling diagram 1800 of generating a RC according to one embodiment of the present disclosure. After multiple reference configurations are generated, the source gNB may generate a RC list including the multiple reference configurations. The source gNB may transmit the RC list to one or more candidate gNBs, wherein one or more RC-IDs for the one or more candidate gNBs may be included in the RC list. The source gNB may transmit the RC list to the UE via an LTM-config (or LTM-candidate in the LTM-config). The source gNB may transmit an RC-ID corresponding to a candidate gNB to the UE via a cell switch command. After receiving a cell switch command, the UE may select an RC from the RC list based on the RC-ID and generate the full candidate configuration based on the selected RC. The UE may apply the full candidate configurations to perform cell switch to the candidate gNB.

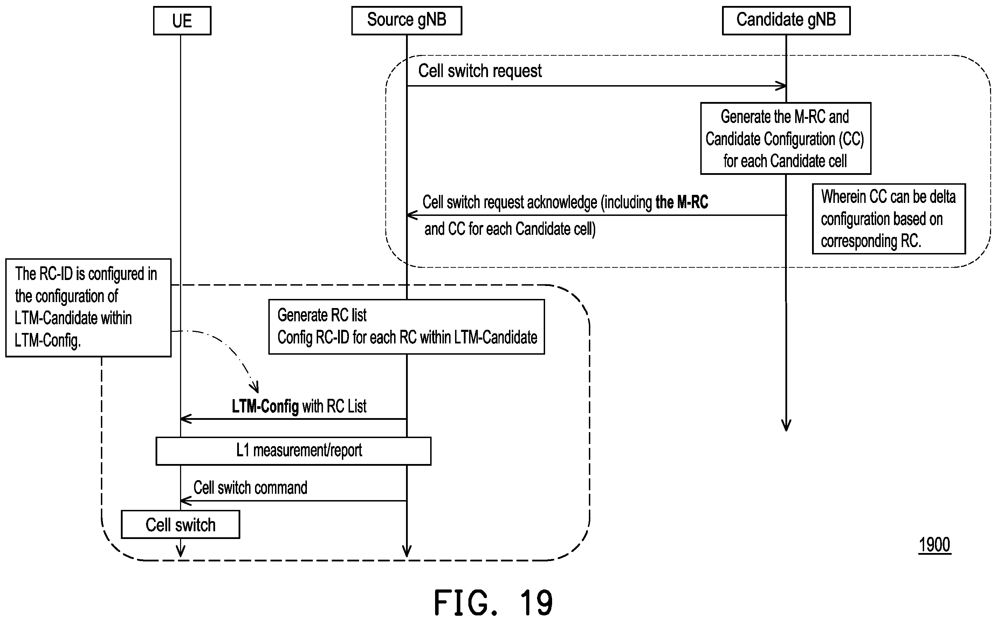

FIG. 19 illustrates a signaling diagram 1900 of generating a M-RC and CCs according to one embodiment of the present disclosure. The source gNB may transmit a cell switch request to one or more candidate gNBs. After receiving the cell switch request, the one or more candidate gNBs may generate multiple reference configurations (M-RC) and a candidate configuration (CC) for each candidate cell. The one or more candidate gNBs may transmit the M-RC and the CCs to the source gNB via a cell switch request acknowledge (ACK). The source gNB may generate an RC list, wherein the RC list may include the M-RC. The source gNB may configure an RC-ID for each RC within the LTM-candidate. The source gNB may configure the CCs into the LTM-config. The source gNB may transmit the LTM-config with the RC list to the UE. After receiving a cell switch command indicating a candidate gNB from the source gNB, the UE may generate a complete configuration corresponding to the indicated candidate gNB according to the LTM-config with the RC list. The UE may apply the complete configuration to perform cell switch to the candidate gNB.

In one embodiment, a CC may be a delta configuration with respect to the corresponding RC (or RC-ID). If the UE determines that a reference configuration is a current UE configuration, the UE may apply the delta configuration to obtain the complete configuration (or the full candidate configuration). That is, the UE may apply the delta configuration to generate the complete configuration.

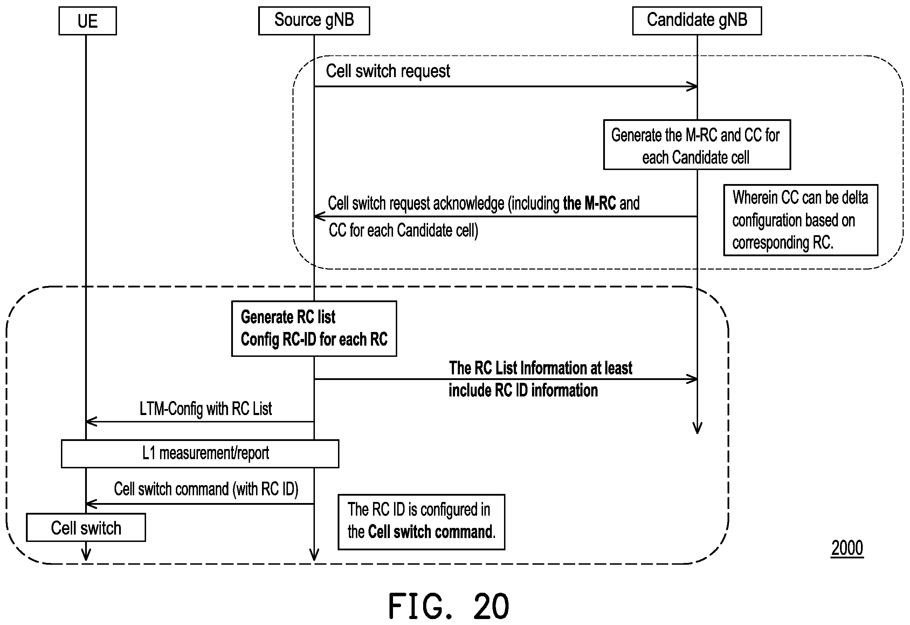

FIG. 20 illustrates a signaling diagram 2000 of generating a M-RC and CCs according to one embodiment of the present disclosure. The source gNB may transmit a cell switch request to one or more candidate gNBs. After receiving the cell switch request, the one or more candidate gNBs may generate multiple reference configurations (M-RC) and a candidate configuration (CC) for each candidate cell. The one or more candidate gNBs may transmit the M-RC and the CCs to the source gNB via a cell switch request acknowledge (ACK). The source gNB may generate an RC list, wherein the RC list may include the M-RC. The source gNB may configure an RC-ID for each RC within the LTM-candidate. The source gNB may transmit the RC list to the one or more candidate gNBs, wherein one or more RC-IDs for the one or more candidate gNBs may be included in the RC list. If a candidate gNB wants to instruct the UE to perform cell switch to a target gNB, the candidate gNB may transmit a cell switch command with an RC-ID corresponding to the target gNB to the UE. On the other hand, the source gNB may configure the CCs into the LTM-config. The source gNB may transmit the LTM-config with the RC list to the UE.

After receiving a cell switch command indicating a candidate cell and the corresponding RC-ID from the source gNB, the UE may select a RC from the RC list according to the RC-ID, and the UE may generate a complete configuration corresponding to the indicated candidate gNB according to selected RC. The UE may apply the complete configuration to perform cell switch to the candidate gNB.

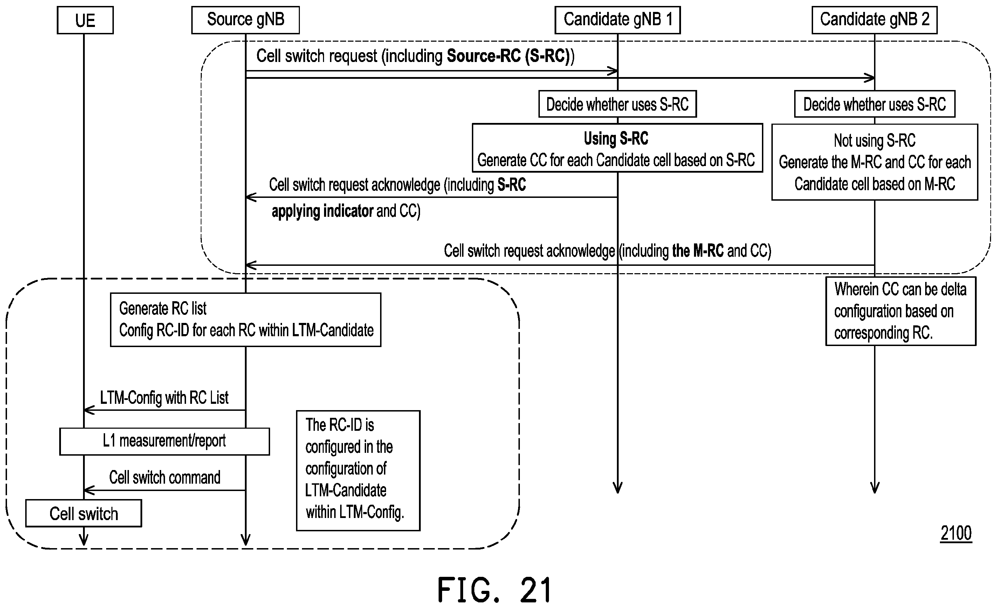

FIG. 21 illustrates a signaling diagram 2100 of generating a RC and CCs according to one embodiment of the present disclosure. The source gNB may transmit a cell switch request to one or more candidate gNBs, wherein the cell switch request may include a source-RC (S-RC, i.e., reference configuration determined by the source gNB). After receiving the cell switch request, the candidate gNB may determine whether to use the S-RC. If the candidate gNB (e.g., candidate gNB 1) determines to use the S-RC, the candidate gNB may generate a CC corresponding to the candidate gNB itself (or generate a CC for each candidate cell) based on the S-RC, wherein the CC may be a delta configuration with respect to the S-RC. The candidate gNB may transmit a S-RC applying indicator and one or more CCs to the source gNB via the cell switch request acknowledge, wherein the S-RC applying indicator may indicate that the S-RC has been used to generate the CCs. If the candidate gNB (e.g., candidate gNB 2) determines not to use the S-RC, the candidate gNB may generate multiple reference configurations (M-RC), and the candidate gNB may generate a CC corresponding to the candidate gNB itself (or generate a CC for each candidate gNB) based on the M-RC, wherein the CC may be a delta configuration with respect to the M-RC. The candidate gNB may transmit the M-RC and one or more CCs to the source gNB via the cell switch request acknowledge.

The source gNB may generate an RC list, wherein the RC list may include the M-RC and/or the S-RC. The source gNB may configure an RC-ID for each RC within the LTM-candidate. The source gNB may configure the CCs into the LTM-config. The source gNB may transmit the LTM-config with the RC list to the UE. After receiving a cell switch command indicating a candidate gNB from the source gNB, the UE may generate a complete configuration corresponding to the indicated candidate gNB according to the LTM-config with the RC list. The UE may apply the complete configuration to perform cell switch to the candidate gNB.

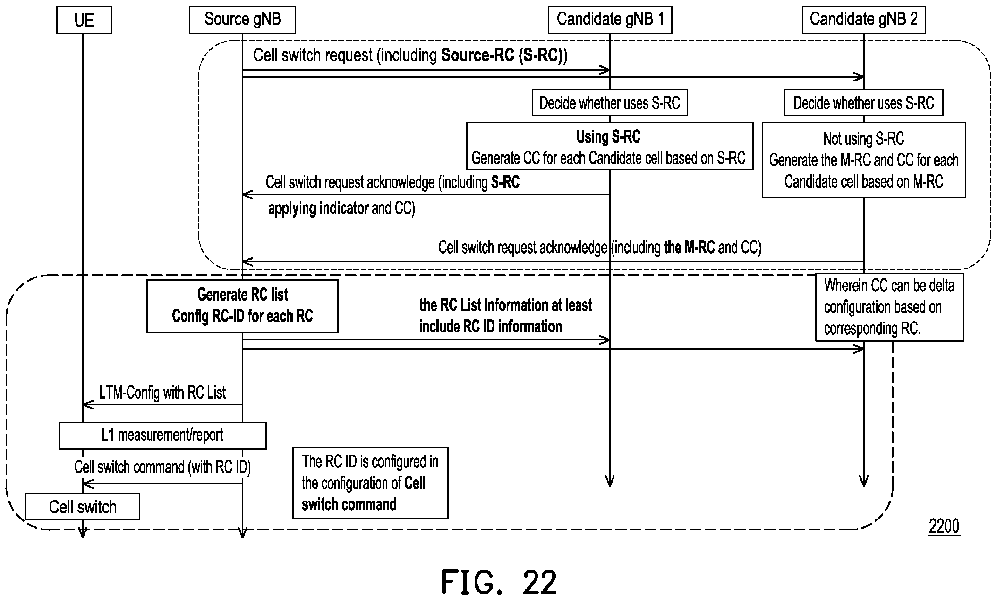

FIG. 22 illustrates a signaling diagram 2200 of generating RCs and CCs according to one embodiment of the present disclosure. The source gNB may transmit a cell switch request to one or more candidate gNBs, wherein the cell switch request may include a source-RC (S-RC, i.e., reference configuration determined by the source gNB). After receiving the cell switch request, the candidate gNB may determine whether to use the S-RC. If the candidate gNB (e.g., candidate gNB 1) determines to use the S-RC, the candidate gNB may generate a CC corresponding to the candidate gNB itself (or generate a CC for each candidate cell) based on the S-RC, wherein the CC may be a delta configuration with respect to the S-RC. The candidate gNB may transmit a S-RC applying indicator and one or more CCs to the source gNB via the cell switch request acknowledge, wherein the S-RC applying indicator may indicate that the S-RC has been used to generate the CCs. If the candidate gNB (e.g., candidate gNB 2) determines not to use the S-RC, the candidate gNB may generate multiple reference configurations (M-RC), and the candidate gNB may generate a CC corresponding to the candidate gNB itself (or generate a CC for each candidate gNB) based on the M-RC, wherein the CC may be a delta configuration with respect to the M-RC. The candidate gNB may transmit the M-RC and one or more CCs to the source gNB via the cell switch request acknowledge.

The source gNB may generate an RC list, wherein the RC list may include the M-RC and/or the S-RC. The source gNB may configure an RC-ID for each RC within the LTM-candidate. The source gNB may transmit the RC list to the one or more candidate gNBs, wherein one or more RC-IDs for the one or more candidate gNBs may be included in the RC list. If a candidate gNB wants to instruct the UE to perform cell switch to a target gNB, the candidate gNB may transmit a cell switch command with an RC-ID corresponding to the target gNB to the UE. On the other hand, the source gNB may configure the CCs into the LTM-config. The source gNB may transmit the LTM-config with the RC list to the UE. After receiving a cell switch command indicating a candidate gNB and the corresponding RC-ID from the source gNB, the UE may select a RC from the RC list according to the RC-ID, and the UE may generate a complete configuration corresponding to the indicated candidate gNB according to selected RC. The UE may apply the complete configuration to perform cell switch to the candidate gNB.

In one embodiment, a single reference configuration (RC) for Inter-CU case may be generated by, for example, the source cell.

In one embodiment, the source gNB may take the CCs of other candidate gNBs into consideration to determine the RC. The candidate gNB may take the RC to re-generate the corresponding CCs.

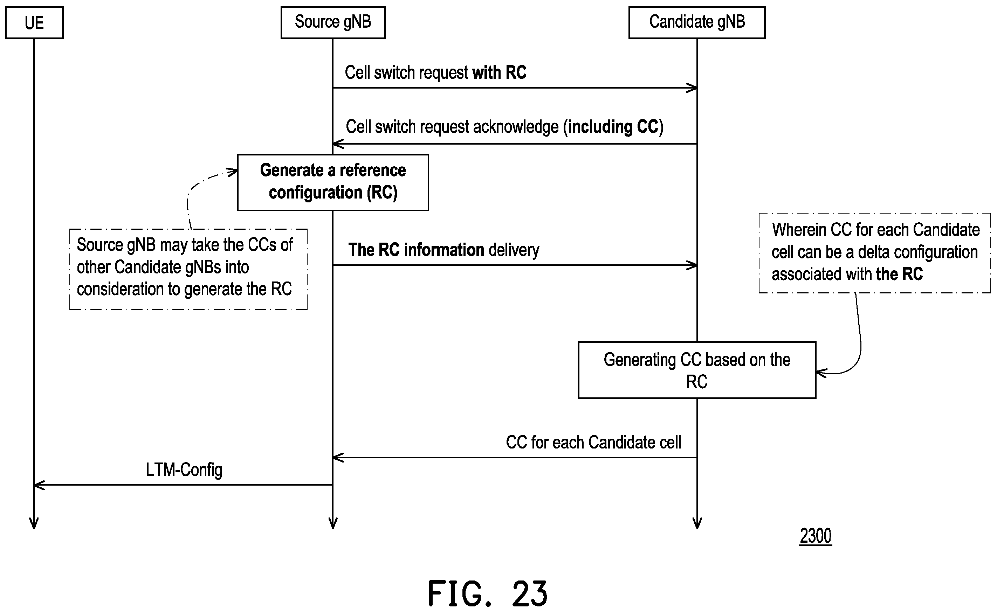

FIG. 23 illustrates a signaling diagram 2300 of generating a RC and CCs according to one embodiment of the present disclosure. The source gNB may transmit a cell switch request to one or more candidate gNBs. After receiving the cell switch request, the candidate gNB may generate a candidate configuration (CC) corresponding to the candidate gNB itself (or generate a CC for each candidate cell). The candidate gNB may transmit one or more CCs to the source gNB via a cell switch request acknowledge (ACK). The source gNB may generate a RC based on the CCs received from each candidate gNB, and the source gNB may deliver the RC information to the one or more candidate gNBs. After receiving the RC information, the candidate gNB may generate (or re-generate, update) one or more CCs based on the RC, wherein the CC can be a delta configuration with respect to the RC. The candidate gNB may transmit one or more CCs to the source gNB. The source gNB may transmit the RC and the CCs to the UE via the LTM-config.

In one embodiment, the source gNB may take the CCs of other candidate gNBs into consideration to determine the RC. The source gNB may take the RC to re-generate the corresponding CCs for candidate cells.

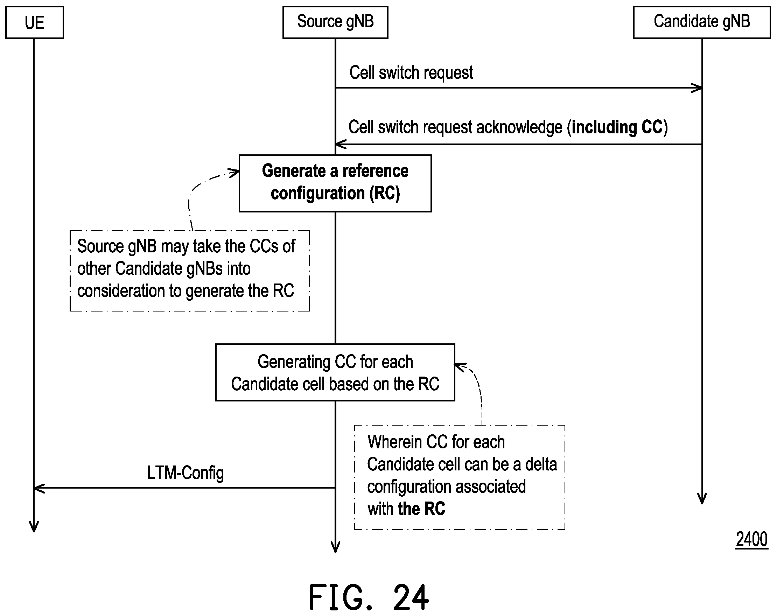

FIG. 24 illustrates a signaling diagram 2400 of generating a RC and CCs according to one embodiment of the present disclosure. The source gNB may transmit a cell switch request to one or more candidate gNBs. After receiving the cell switch command, the candidate gNB may generate a candidate configuration (CC) corresponding to the candidate gNB itself (or generate a CC for each candidate cell). The candidate gNB may transmit one or more CC to the source gNB via a cell switch request acknowledge (ACK). The source gNB may generate a RC based on the CCs received from each candidate gNB. After the RC is generated, the source gNB may generate (or re-generate, update) a CC for each candidate cell. The source gNB may transmit the RC and the CCs to the UE via the LTM-config.

In one embodiment, the source gNB may determine the RC and inform the RC to each candidate gNB. The candidate gNB may take the RC into consideration to generate the corresponding CCs.

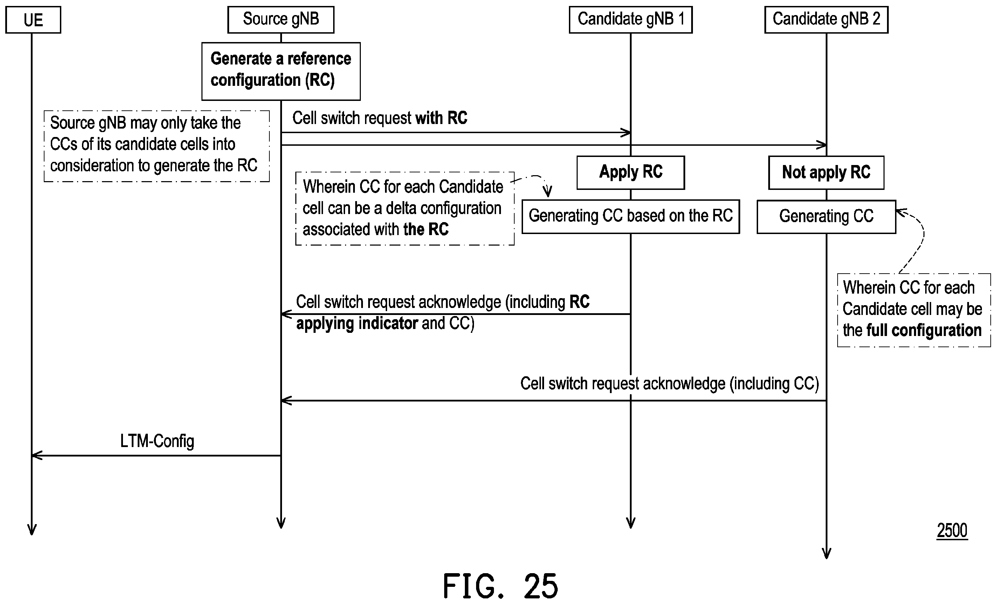

FIG. 25 illustrates a signaling diagram 2500 of generating a RC and CCs according to one embodiment of the present disclosure. The source gNB may generate a RC. For example, the source gNB may only take the CCs of its candidate cells into consideration to generate the RC. The source gNB may transmit the RC to one or more candidate gNBs via a cell switch request. After receiving the cell switch request with the RC, the candidate gNB may determine whether to use the RC. If the candidate gNB (e.g., candidate gNB 1) determines to use the RC, the candidate gNB may generate a CC corresponding to the candidate gNB itself (or generate a CC for each candidate cell) based on the RC, wherein the CC may be a delta configuration with respect to the RC. The candidate gNB may transmit a RC applying indicator and one or more CCs to the source gNB via the cell switch request acknowledge, wherein the RC applying indicator may indicate that the RC has been used to generate the CCs. If the candidate gNB (e.g., candidate gNB 2) determines not to use the RC, the candidate gNB may generate a CC corresponding to the candidate gNB itself (or generate a CC for each candidate cell), wherein each CC may be a full configuration. The candidate gNB may transmit one or more CCs to the source gNB via the cell switch request acknowledge. The source gNB may transmit the RC and the CCs to the UE via the LTM-config.

In one embodiment, only one CC can be generated for one candidate cell by the source gNB or the candidate gNB. In one embodiment, multiple CCs can be generated for one candidate cell by the source gNB or the candidate gNB.

For some kinds of configuration that may be same between different CUs, reference configuration scheme with single RC may be useful to reduce the signaling overhead for inter-CU LTM. For example, the reference configuration scheme with single RC may reduce the signaling overhead for the configurations of multicast/broadcast service (MBS) radio bearer (MRB). Therefore, when take different feature of different configuration into consideration, only single reference configuration or only multiple reference configurations may not able to reduce the signaling overhead efficiently. The single reference configuration scheme and the multiple reference configurations scheme may be combined. The single reference configuration may also be referred to as a home reference (HR). The multiple reference configurations may also be referred to as child references (CR).

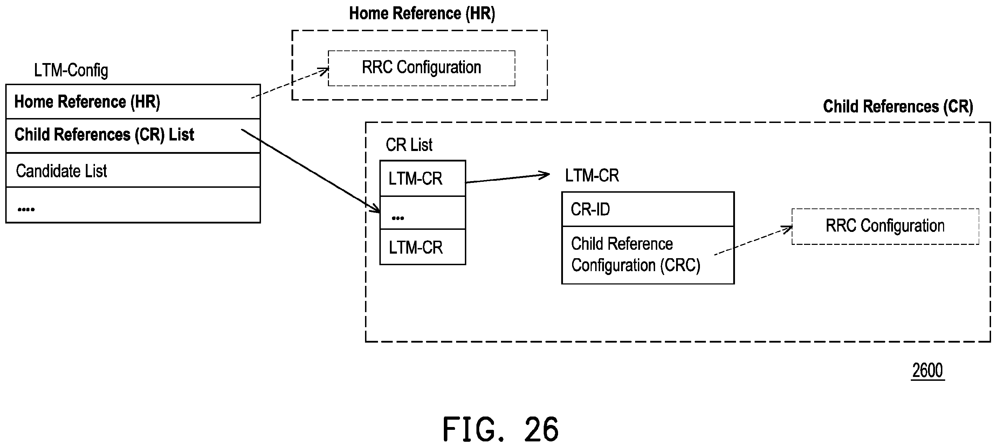

FIG. 26 illustrates a schematic diagram 2600 of LTM-config according to one embodiment of the present disclosure. An LTM-config may include a home reference (HR) and a child reference (CR) list. The CR list may include one or more LTM-CRs, wherein each LTM-CR may include an CR-ID and a child reference configuration (CRC) corresponding to the CR-ID. The HR or the CR may include RRC configuration such as measurement configuration, mobility control, radio resource configuration (including RB, MAC main configuration, or physical channel configuration), or security configuration.

In one embodiment, if a configuration parameter is the same in each candidate cell (the configuration parameter is the same among N candidate cells, where N is a positive integer), the configuration parameter may be carried by a HR. If a configuration parameter is the same across a few candidate cells (the configuration parameter is the same among M candidate cells, where M is a positive integer less than N), the configuration parameter may be carried by a CR. If a configuration parameter is different in each candidate cell, the configuration parameter may be carried by a CC for each candidate cell. A full configuration can be generated by combining the HR, the CR, and the CC.

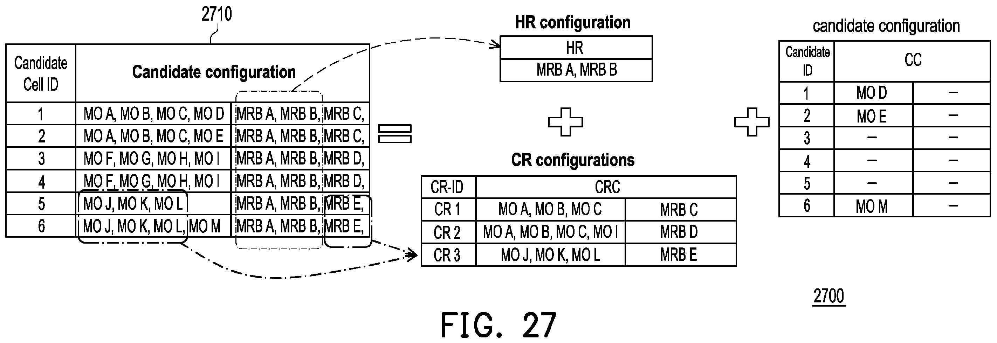

FIG. 27 illustrates a schematic diagram 2700 of configuration scheme according to one embodiment of the present disclosure. Assume that the candidate cell 1-6 want to configure MOs and MRBs as table 2710. That is, the complete configuration of candidate cell 1 includes MO A, MO B, MO C, MO D, MRB A, MRB B, and MRB C. The complete configuration of candidate cell 2 includes MO A, MO B, MO C, MO E, MRB A, MRB B, and MRB C. The complete configuration of the candidate cell 3 includes MO F, MO G, MO H, MO I, MRB A, MRB B, and MRB D. The complete configuration of the candidate cell 4 includes MO F, MO G, MO H, MO I MRB A, MRB B, and MRB D. The complete configuration of the candidate cell 5 includes MO J, MO K, MO L MRB A, MRB B, and MRB E. The complete configuration of the candidate cell 6 includes MO J, MO K, MO L, MO M, MRB A, MRB B, and MRB E.

Table 2710 may be divided into a HR, one or more CRs, and a CC for each candidate cell. Specifically, since MRB A and MRB B are required by all of the candidate cells, MRB A and MRB B may be allocated in the HR configuration, and MRB A and MRB B may be removed from table 2710. Since MO A, MO B, MO C, and MRB C are required by the candidate cell 1 and the candidate cell 2, MO A, MO B, MO C, and MRB C may be allocated in the CR (i.e., CR 1) corresponding to the candidate cell 1 and the candidate cell 2. Since MO F, MO G, MO G, MO I, and MRB D are required by the candidate cell 3 and the candidate cell 4, MO F, MO G, MO G, MO I, and MRB D may be allocated in the CR (i.e., CR 2) corresponding to the candidate cell 3 and the candidate cell 4. Since MO J, MO K, MO L, and MRB E are required by the candidate cell 5 and the candidate cell 6, MO J, MO K, MO L, and MRB E may be allocated in the CR (i.e., CR 3) corresponding to the candidate cell 5 and the candidate cell 6. Since MO D, MO E, and MO M are only required by the candidate cell 1, the candidate cell 2, and the candidate cell 6 respectively, MO D, MO E, and MO M may be allocated to the CC corresponding to the candidate cell 1, the CC corresponding to the candidate cell 2, and the CC corresponding to the candidate cell 6 respectively.

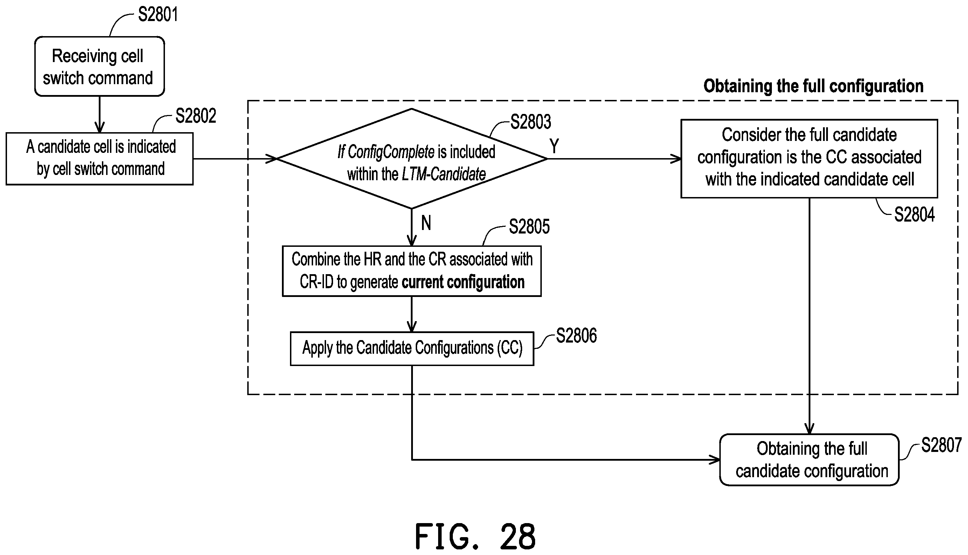

The UE may combine home reference configuration with child reference configurations. In one embodiment, the CR configuration always exists for each UE. FIG. 28 illustrates a flowchart of generating a full CC according to one embodiment of the present disclosure. In step S2801, the UE may receive a cell switch command from the network. In step S2802, the UE may determine a candidate cell indicated by the cell switch command (or indicated by the LTM-candidate in the cell switch command). In step S2803, the UE may determine whether *ConfigComplete* is included in the LTM-candidate. If *ConfigComplete* is included in the LTM-candidate, the UE may execute step S2804. If *ConfigComplete* is not included in the LTM-candidate, the UE may execute step S2805.

In step S2804, the UE may consider the full candidate configuration is the CC associated with the indicated candidate cell. The UE may apply the CC as the current UE configuration. In step S2805, the UE may combine the HR with the CR associated with the CR-ID (e.g., CR-ID corresponding to the indicated candidate cell) to generate a current configuration. In step S2806, the UE may apply the candidate configuration (CC) corresponding to the indicated candidate cell. That is, the UE may generate the full CC by combining the current configuration with the CC. In step S2807, the UE may obtain the full candidate configuration from step S2804 or step S2806.

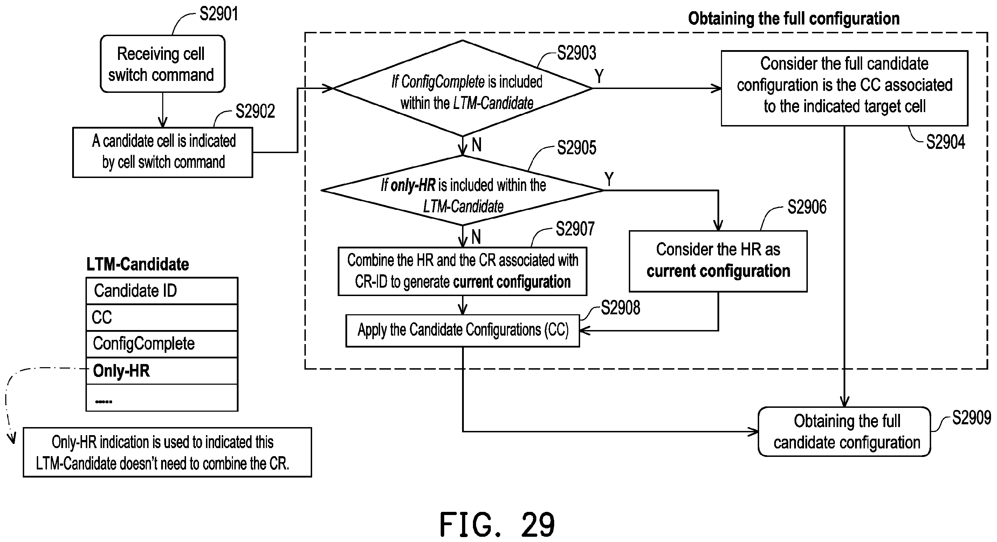

In one embodiment, the CR configuration may not exist for the UE. The UE may not need to combine the CR to generate a full configuration. FIG. 29 illustrates a flowchart of generating a full CC according to one embodiment of the present disclosure. In step S2901, the UE may receive a cell switch command from the network. In step S2902, the UE may determine a candidate cell indicated by the cell switch command (or indicated by the LTM-candidate in the cell switch command). In step S2903, the UE may determine whether *ConfigComplete* is included in the LTM-candidate. If *ConfigComplete* is included in the LTM-candidate, the UE may execute step S2904. If *ConfigComplete* is not included in the LTM-candidate, the UE may execute step S2905.

In step S2904, the UE may consider the full candidate configuration is the CC associated with the indicated candidate cell. The UE may apply the CC as the current UE configuration. In step S2905, the UE may determine whether *only-HR* indication is included in the LTM-candidate. If *only-HR* is included in the LTM-candidate, the UE may execute step S2906. If *only-HR* is not included in the LTM-candidate, the UE may execute step S2907.

In step S2906, the UE may consider only the HR as a current configuration. In step S2907, the UE may combine the HR with the CR associated with the CR-ID to generate a current configuration. In step S2908, the UE may apply the candidate configuration (CC) corresponding to the indicated candidate cell. That is, the UE may generate the full CC by combining the current configuration with the CC. In step S2909, the UE may obtain the full candidate configuration from step S2904 or step S2908.

In one embodiment, the CR-ID may be included in the configuration of LTM-candidate. The UE may combine the HR with the CR based on the indicated CR-ID to generate a current configuration (e.g., as shown in FIG. 28 or FIG. 29).

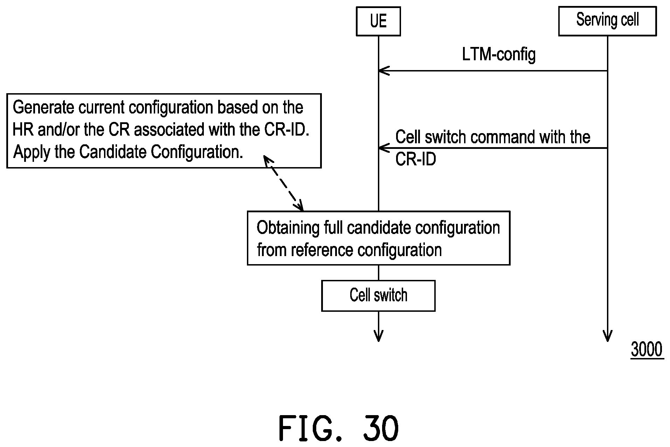

In one embodiment, the CR-ID may be included in the cell switch command. The UE may perform cell switch and obtain the full candidate configuration after receiving the cell switch command. FIG. 30 illustrates a signaling diagram 3000 of cell switch according to one embodiment of the present disclosure. The serving cell may configure a HR, one or more CRs, or one or more CCs to the UE via an LTM-config. The serving cell may transmit a CR-ID to the UE via a cell switch command. After receiving the cell switch command, the UE may generate a current configuration based on the HR and/or the CR associated with the CR-ID, and the UE may apply the candidate configuration. For example, the UE may combine the current configuration with the candidate configuration to obtain a full candidate configuration. The UE may apply the full candidate configuration to perform the cell switch.

The source gNB may take the candidate configuration of each candidate cell into consideration to generate the HR. In one embodiment, the CR may be generated by each candidate gNB. In one embodiment, the CR may be generated by the source gNB.

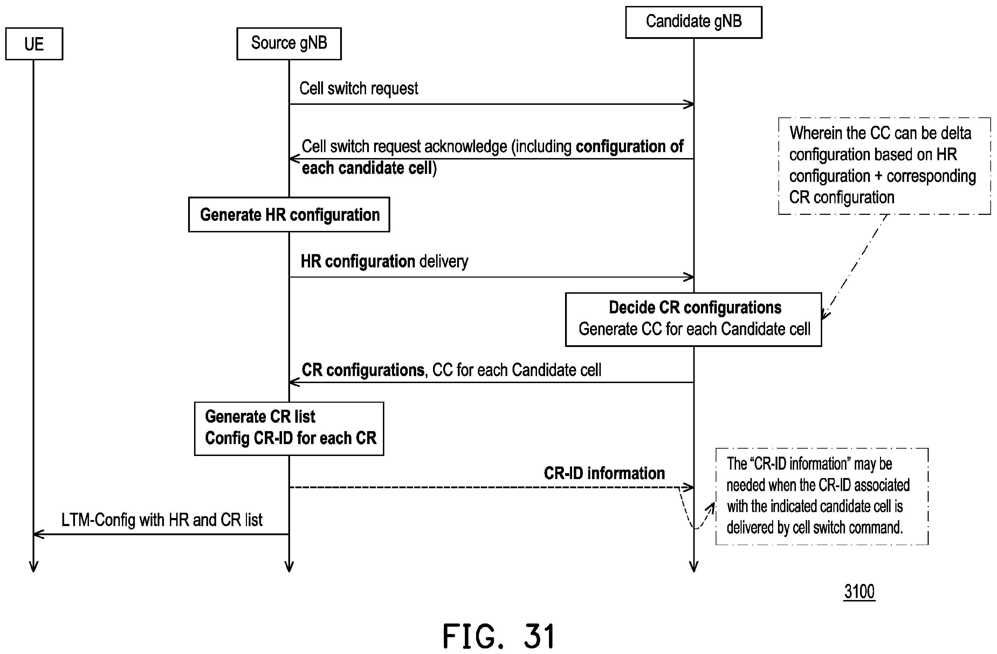

FIG. 31 illustrates a signaling diagram 3100 of generating a HR and a CR list according to one embodiment of the present disclosure. The source gNB may transmit a cell switch request to one or more candidate gNBs. After receiving the cell switch request, the one or more candidate gNBs may generate a candidate configuration (CC) for each candidate cell. The one or more candidate gNBs may transmit the CCs to the source gNB via a cell switch request acknowledge. The source gNB may take the CCs for each candidate cell into consideration to generate the HR, and may deliver the HR to the one or more candidate gNBs. The one or more candidate gNBs may determine one or more CRs, and may generate a CC for each candidate gNB, wherein the CC may be a delta configuration with respect to the combination of the HR and the corresponding CR. The one or more candidate gNBs may transmit one or more CRs and one or more CCs to the source gNB. The source gNB may generate a CR list based on the CRs, and the source gNB may configure a CR-ID for each CR in the CR list. The source gNB may transmit the CR-ID information to the one or more candidate gNBs. The CR-ID may be included in a cell switch command by a candidate gNB when the candidate gNB initial a cell switch to a target cell (or a candidate cell) corresponding to the CR-ID. The source gNB may transmit an LTM-config with the HR and the CR list to the UE.

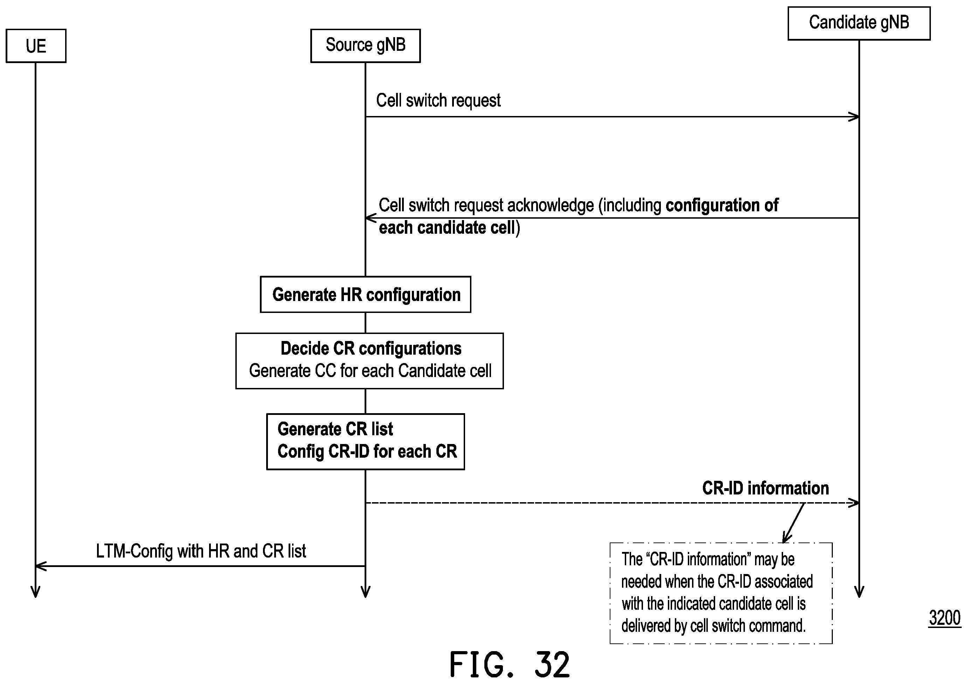

FIG. 32 illustrates a signaling diagram 3200 of generating a HR and a CR list according to one embodiment of the present disclosure. The source gNB may transmit a cell switch request to one or more candidate gNBs. After receiving the cell switch request, the one or more candidate gNBs may generate a candidate configuration (CC) for each candidate cell. The one or more candidate gNBs may transmit the CCs to the source gNB via a cell switch request acknowledge. The source gNB may take the CCs for each candidate cell into consideration to generate a HR. The source gNB may determine one or more CRs, and may generate a CC for each candidate gNB. The source gNB may generate a CR list based on the CRs, and the source gNB may configure a CR-ID for each CR in the CR list. The source gNB may transmit the CR-ID information to the one or more candidate gNBs. The CR-ID may be included in a cell switch command by a candidate gNB when the candidate gNB initial a cell switch to a target cell corresponding to the CR-ID. The source gNB may transmit an LTM-config with the HR and the CR list to the UE.

The source gNB may take the reference configuration for each candidate gNB into consideration to generate the HR. In one embodiment, the source gNB may generate one or more CRs based on the HR. In on embodiment, one or more candidate gNBs may generate one or more CR based on the HR.

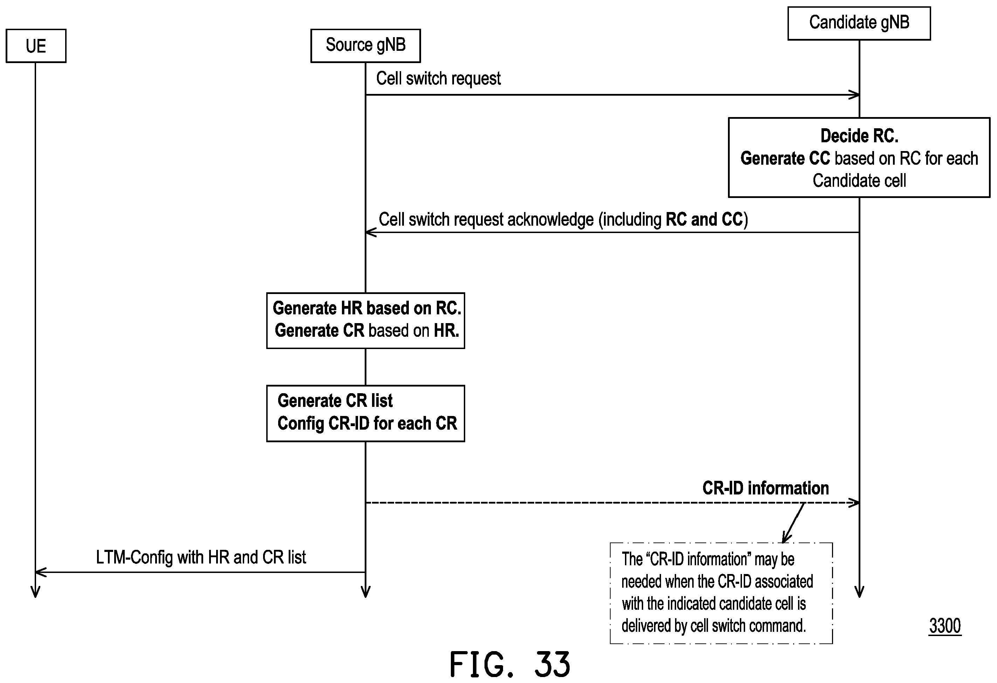

FIG. 33 illustrates a signaling diagram 3300 of generating a HR and a CR list according to one embodiment of the present disclosure. The source gNB may transmit a cell switch request to one or more candidate gNBs. After receiving the cell switch request, the one or more candidate gNBs may determine one or more RCs, and may generate one or more CCs based on the RC for each candidate cell. The one or more candidate gNBs may transmit the RCs and the CCs to the source gNB via a cell switch request acknowledge. The source gNB may take the RCs for each candidate cell into consideration to generate a HR, and may generate one or more CRs based on the HR. The source gNB may generate a CR list based on the CRs, and the source gNB may configure a CR-ID for each CR in the CR list. The source gNB may transmit the CR-ID information to the one or more candidate gNBs. The CR-ID may be included in a cell switch command by a candidate gNB when the candidate gNB initial a cell switch to a target cell corresponding to the CR-ID. The source gNB may transmit an LTM-config with the HR and the CR list to the UE.

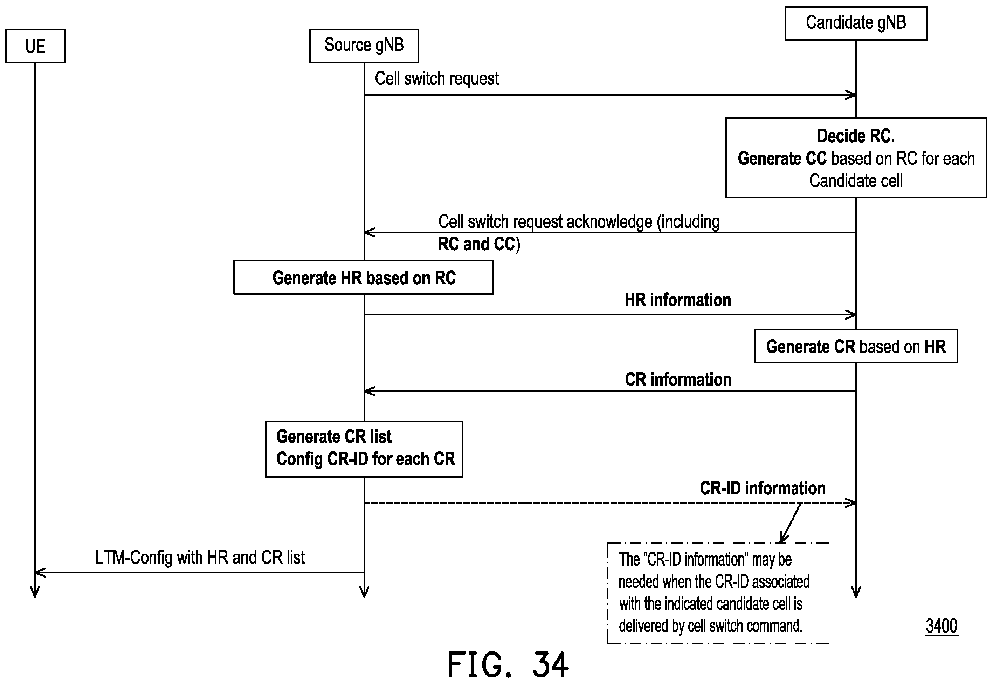

FIG. 34 illustrates a signaling diagram 3400 of generating a HR and a CR list according to one embodiment of the present disclosure. The source gNB may transmit a cell switch request to one or more candidate gNBs. After receiving the cell switch request, the one or more candidate gNBs may determine one or more RCs, and may generate one or more CCs based on the RC for each candidate cell. The one or more candidate gNBs may transmit the RCs and the CCs to the source gNB via a cell switch request acknowledge. The source gNB may take the RCs for each candidate cell into consideration to generate a HR, and may transmit the HR information to the one or more candidate gNBs. The one or more candidate gNBs may generate one or more CRs based on the HR, and may transmit the CR information to the source gNB, wherein the CR information may include the CRs generated by the one or more candidate gNBs. After receiving the CR information, the source gNB may generate a CR list based on the CR information, and the source gNB may configure a CR-ID for each CR in the CR list. The source gNB may transmit the CR-ID information to the one or more candidate gNBs. The CR-ID may be included in a cell switch command by a candidate gNB when the candidate gNB initial a cell switch to a target cell corresponding to the CR-ID. The source gNB may transmit an LTM-config with the HR and the CR list to the UE.

In one embodiment, the source gNB may only take the candidate configuration of each candidate cell belong to the source gNB into consideration to generate a HR. One or more candidate gNBs may generate one or more CRs based on the HR.

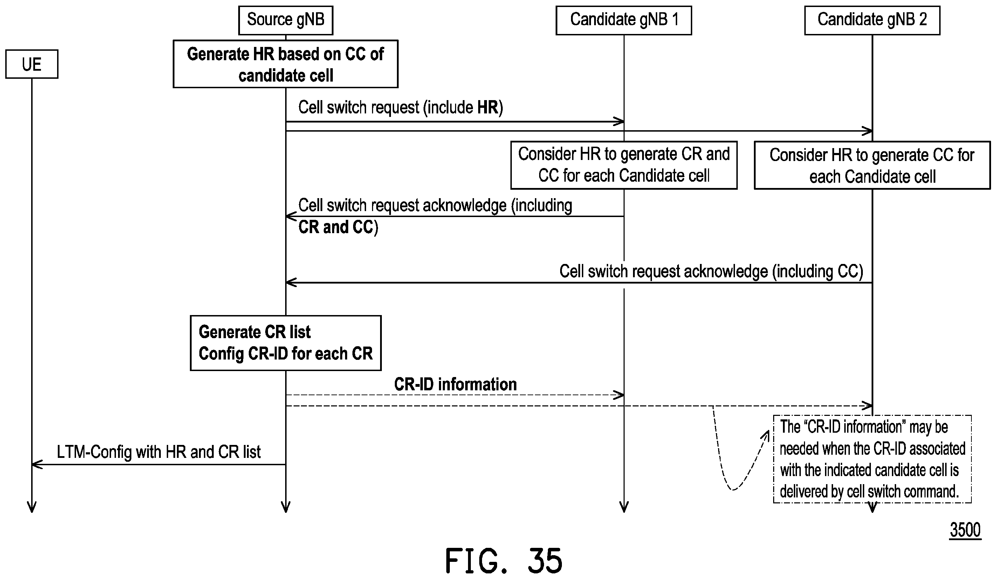

FIG. 35 illustrates a signaling diagram 3500 of generating a HR and a CR list according to one embodiment of the present disclosure. After one or more CCs are generated, the source gNB may generate a HR based on the CC of each candidate cell. The source gNB may only take the candidate configuration of each candidate cell belonging to the source gNB into consideration to generate the HR. The source gNB may transmit a cell switch request to one or more candidate gNBs, wherein the cell switch request may include the HR. After receiving the cell switch request, the candidate gNB may determine whether to generate a CR based on the HR.

If the candidate gNB (e.g., candidate gNB 1) determines to generate the CR, the candidate gNB may generate a CR and a CC corresponding to the candidate gNB itself (or generate a CR and a CC for each candidate gNB) based on the HR. The candidate gNB may transmit one or more CRs and one or more CCs to the source gNB via the cell switch request acknowledge. If the candidate gNB (e.g., candidate gNB 2) determines not to generate the CR, the candidate gNB may only generate a CC corresponding to the candidate gNB itself (or only generate a CC for each candidate cell) based on the HR. The candidate gNB may transmit one or more LTM-candidates to the source gNB via the cell switch request acknowledge, wherein one or more CCs may be included in each LTM-candidate. In response to receiving one or more CRs, the source gNB may generate a CR list, wherein the CR list may include one or more CRs. The source gNB may configure a CR-ID for each CR within the LTM-candidate. The source gNB may configure the CCs into the LTM-config. The source gNB may transmit the LTM-config with the HR and the CR list to the UE.

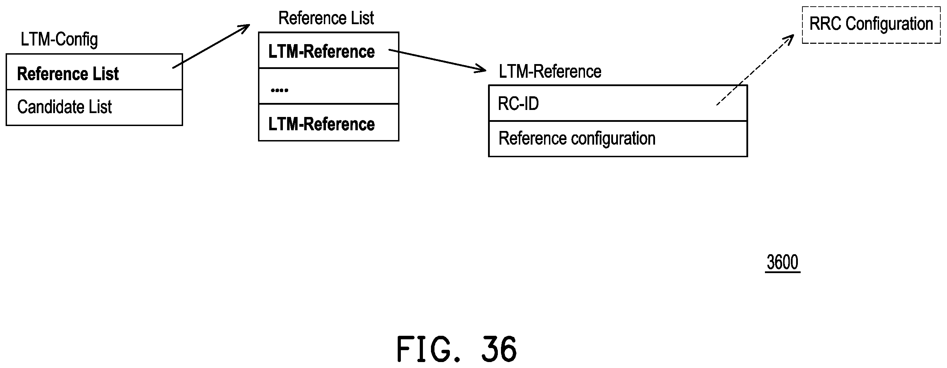

To simplify the UE behavior, another HR and CR implantation scheme is the RC-ID list scheme. By using this scheme, the UE does not need to differentiate the HR or CR. The UE may generate a complete configuration by using a reference configuration according to the RC-ID list. FIG. 36 illustrates a schematic diagram 3600 of LTM-config according to one embodiment of the present disclosure. An LTM-config may include a reference list and a candidate list. The reference list may include one or more LTM references, and each LTM reference may include an RC or an RC-ID. An RC-ID list including multiple RC-IDs in the LTM-candidate or in the cell switch command may be used to represent combined multiple RCs.

In one embodiment, the RC-ID list may be included in the LTM-candidate. In one embodiment, the RC-ID list may be included in the cell switch command. The embodiments provide a manner for combining the reference configuration flexibly. For example, if a UE is not configured with MRB, the UE may not combine the reference configuration related to MRB.

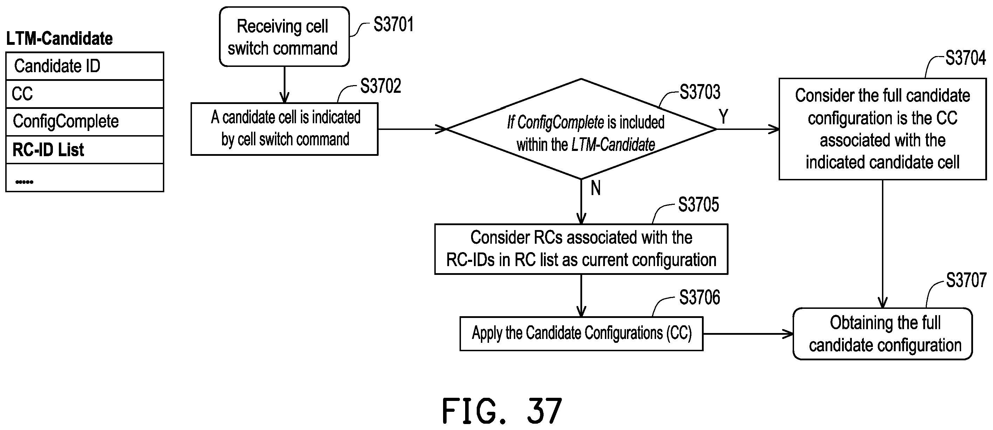

FIG. 37 illustrates a flowchart of generating a full CC according to one embodiment of the present disclosure. In step S3701, the UE may receive a cell switch command from the network. In step S3702, the UE may determine a candidate cell indicated by the cell switch command (or indicated by the LTM-candidate in the cell switch command). The LTM-candidate may include a RC-ID list, and the RC-ID list may include one or more RC-IDs. In step S3703, the UE may determine whether *ConfigComplete* is included in the LTM-candidate. If *ConfigComplete* is included in the LTM-candidate, the UE may execute step S3704. If *ConfigComplete* is not included in the LTM-candidate, the UE may execute step S3705.

In step S3704, the UE may consider the full candidate configuration is the CC associated with the indicated candidate cell. The UE may generate the full CC by using only the CC. In step S3705, the UE may consider one or more RCs associated with the RC-IDs in the RC list (i.e., RC-ID list) as a current configuration. In step S3706, the UE may apply the candidate configuration (CC) corresponding to the indicated candidate cell. That is, the UE may generate the full CC by combining the current configuration with the CC. In step S3707, the UE may obtain the full candidate configuration from step S3704 or step S3706.

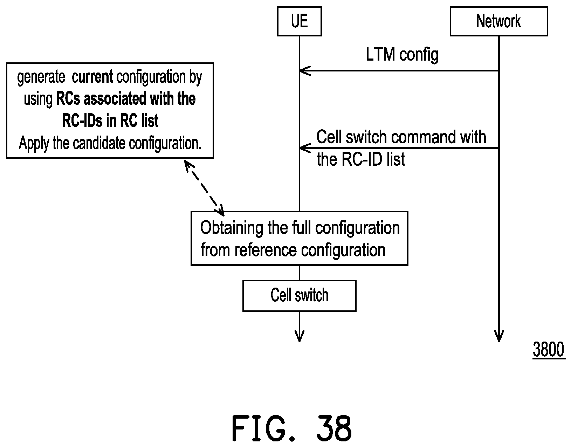

FIG. 38 illustrates a signaling diagram 3800 of cell switch according to one embodiment of the present disclosure. The network may pre-configure one or more RCs to the UE via an LTM-config. The network may transmit a RC-ID list to the UE via a cell switch command. After receiving the cell switch command, the UE may generate a current configuration by using the RCs associated with the RC-ID list, and the UE may apply the candidate configuration. For example, the UE may combine the current configuration (i.e., one or more RCs associated with the RC-ID list) with the candidate configuration to obtain a full candidate configuration. The UE may apply the full candidate configuration to perform the cell switch.

In one embodiment, the complete configuration generated by the reference configuration scheme in the present disclosure may be applied by the UE in response to conditional trigger events associated with a mobility operation, wherein the conditional trigger event may include a handover (HO), a conditional handover (CHO), a conditional lower-layer triggered mobility (C-LTM), or a conditional policy-assisted configuration (CPAC).

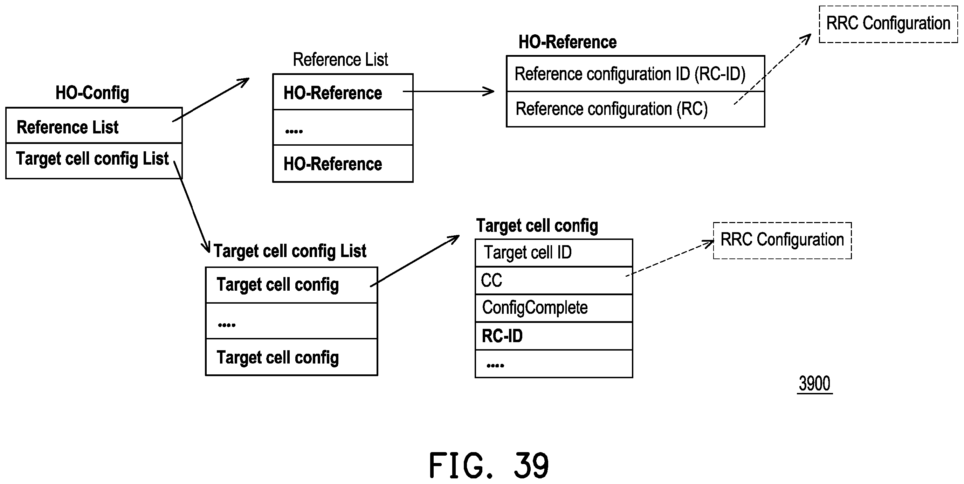

One or more RCs and CCs may be included in a HO configuration (HO-config). FIG. 39 illustrates a schematic diagram 3900 of HO-config according to one embodiment of the present disclosure. A HO-config may include a reference list and a target cell configuration list (target cell config list). The reference list may include one or more HO references, and each HO reference may include an RC or an RC-ID. The target cell config list may include one or more target cell configurations (target cell config), wherein each target cell config may include a target cell ID, a CC, a *ConfigComplete,* or an RC-ID.

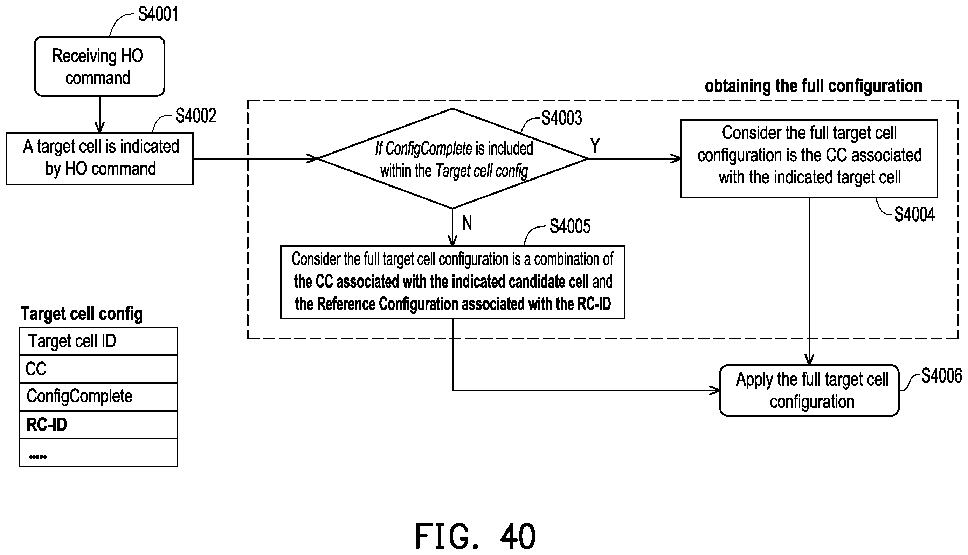

FIG. 40 illustrates a flowchart of generating a full CC according to one embodiment of the present disclosure. In step S4001, the UE may receive a HO command from the network. In step S4002, the UE may determine a target cell indicated by the HO command (or indicated by the target cell config in the HO command). In step S4003, the UE may determine whether *ConfigComplete* is included in the target cell config. If *ConfigComplete* is included in the target cell config, the UE may execute step S4004. If *ConfigComplete* is not included in the target cell config, the UE may execute step S4005.

In step S4004, the UE may consider the full target cell configuration is the CC associated with the indicated target cell. The UE may generate the full target cell configuration by using only the CC. In step S4005, the UE may consider the full target cell configuration is a combination of the CC associated with the indicated target cell and the RC associated with the RC-ID. The UE may generate the full target cell configuration by combining the RC with the CC associated with the indicated target cell. In step S4006, the UE may apply the full target cell configuration of the indicated target cell to perform a handover to the indicated target cell.

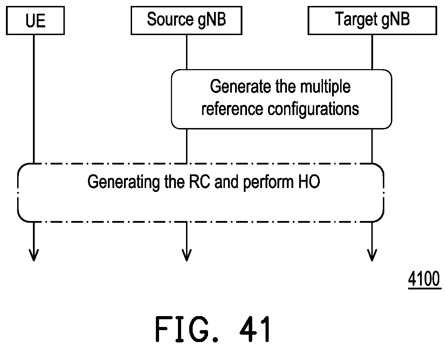

FIG. 41 illustrates a signaling diagram 4100 of generating reference configurations according to one embodiment of the present disclosure. Multiple reference configurations may be generated by a source gNB and one or more target gNBs. In one embodiment, the one or more target gNBs may generate the M-RC and the CCs. In one embodiment, the source gNB may provide information to the one or more target gNBs. The one or more target gNBs may generate the M-RC and the CCs according to the information. On the other hand, the RC for executing HO may be generated by the UE, the source gNB, and one or more target gNBs.

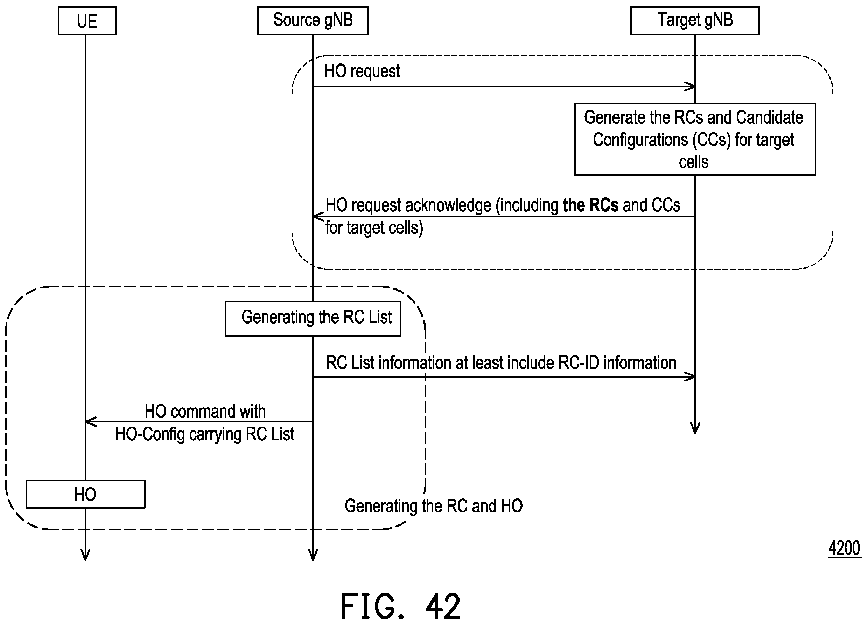

FIG. 42 illustrates a signaling diagram 4200 of generating RCs and CCs according to one embodiment of the present disclosure. The source gNB may transmit a HO request to one or more target gNBs. After receiving the HO request, the one or more target gNBs may generate multiple RCs and a candidate configuration (CC) for each target cell. The one or more target gNBs may transmit the RCs and the CCs to the source gNB via a HO request acknowledge. The source gNB may generate an RC list, wherein the RC list may include the RCs. The source gNB may transmit the RC list to the one or more target gNBs, wherein one or more RC-IDs for the one or more target gNBs may be included in the RC list. If a target gNB wants to instruct the UE to perform HO to another target gNB, the target gNB may transmit a HO command with an RC-ID corresponding to another target gNB to the UE. On the other hand, the source gNB may configure an RC-ID for each RC within the RC list. The source gNB may configure the CCs into the HO-config. The source gNB may transmit the HO command with the HO-config carrying the RC list to the UE.

After receiving a HO command indicating a target gNB and the corresponding RC-ID from the source gNB, the UE may select a RC from the RC list according to the RC-ID, and the UE may generate a complete configuration corresponding to the indicated target gNB according to selected RC. The UE may apply the complete configuration to perform HO to the target gNB.

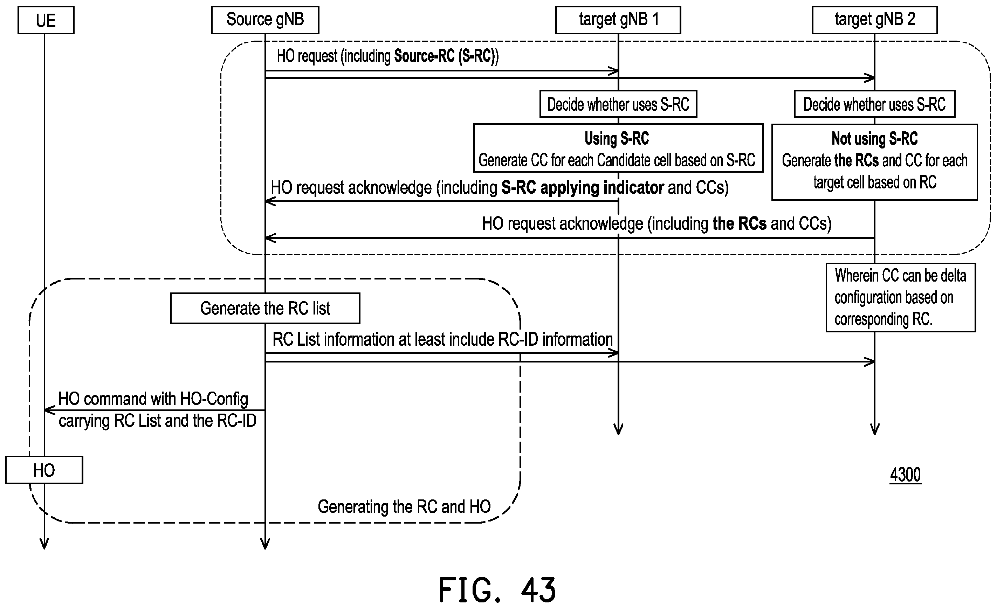

FIG. 43 illustrates a signaling diagram 4300 of generating RCs and CCs according to one embodiment of the present disclosure. The source gNB may transmit a HO request to one or more target gNBs, wherein the HO request may include a source-RC (S-RC, i.e., reference configuration determined by the source gNB). After receiving the HO request, the target gNB may determine whether to use the S-RC. If the target gNB (e.g., target gNB 1) determines to use the S-RC, the target gNB may generate a CC corresponding to the target gNB itself (or generate a CC for each target gNB) based on the S-RC, wherein the CC may be a delta configuration with respect to the S-RC. The target gNB may transmit a S-RC applying indicator and one or more CCs to the source gNB via the HO request acknowledge, wherein the S-RC applying indicator may indicate that the S-RC has been used to generate the CCs. If the target gNB (e.g., target gNB 2) determines not to use the S-RC, the target gNB may generate multiple reference configurations, and the target gNB may generate a CC corresponding to the target gNB itself (or generate a CC for each target gNB) based on the multiple RCs, wherein the CC may be a delta configuration with respect to the multiple RCs. The target gNB may transmit the multiple RCs and one or more CCs to the source gNB via the HO request acknowledge.

The source gNB may generate an RC list, wherein the RC list may include the multiple RCs. The source gNB may transmit the RC list to the one or more target gNBs, wherein one or more RC-IDs for the one or more target gNBs may be included in the RC list. If a target gNB wants to instruct the UE to perform HO to another target gNB, the target gNB may transmit a HO command with an RC-ID corresponding to another target gNB to the UE. On the other hand, the source gNB may configure an RC-ID for each RC within the HO-target. The source gNB may configure the CCs into the HO-config. The source gNB may transmit the HO command with the HO-config carrying the RC list and the RC-ID to the UE. After receiving a HO command indicating a target gNB and the corresponding RC-ID from the source gNB, the UE may select a RC from the RC list according to the RC-ID, and the UE may generate a complete configuration corresponding to the indicated target gNB according to selected RC. The UE may apply the complete configuration to perform HO to the target gNB.

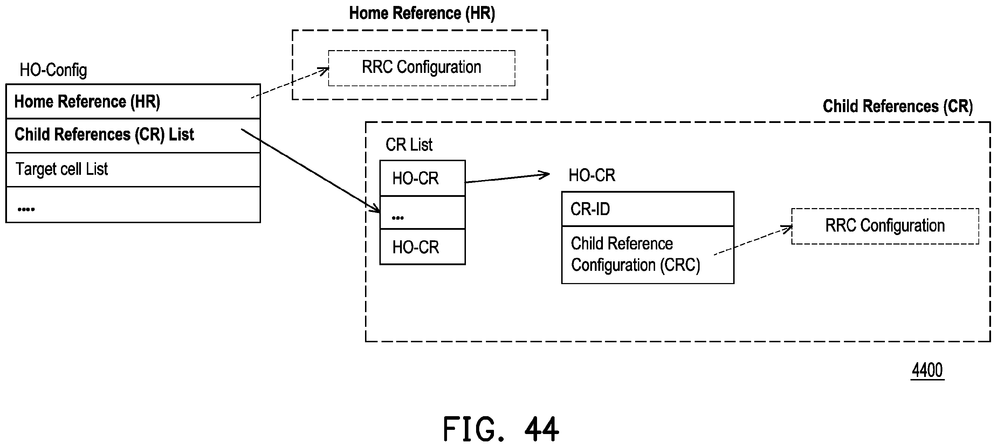

FIG. 44 illustrates a schematic diagram 4400 of HO-config according to one embodiment of the present disclosure. A HO-config may include a home reference (HR) and a child reference (CR) list. The CR list may include one or more HO-CRs, wherein each HO-CR may include an CR-ID and a child reference configuration (CRC) corresponding to the CR-ID. The HR or the CR may include RRC configuration such as measurement configuration, mobility control, radio resource configuration (including RB, MAC main configuration, or physical channel configuration), or security configuration.

In one embodiment, if a configuration parameter is the same in each target cell (the configuration parameter is the same among N target cells, where N is a positive integer), the configuration parameter may be carried by a HR. If a configuration parameter is the same across a few target cells (the configuration parameter is the same among M target cells, where M is a positive integer less than N), the configuration parameter may be carried by a CR. If a configuration parameter is different in each target cell, the configuration parameter may be carried by a CC for each target cell. A full configuration can be generated by combining the HR, the CR, and the CC.

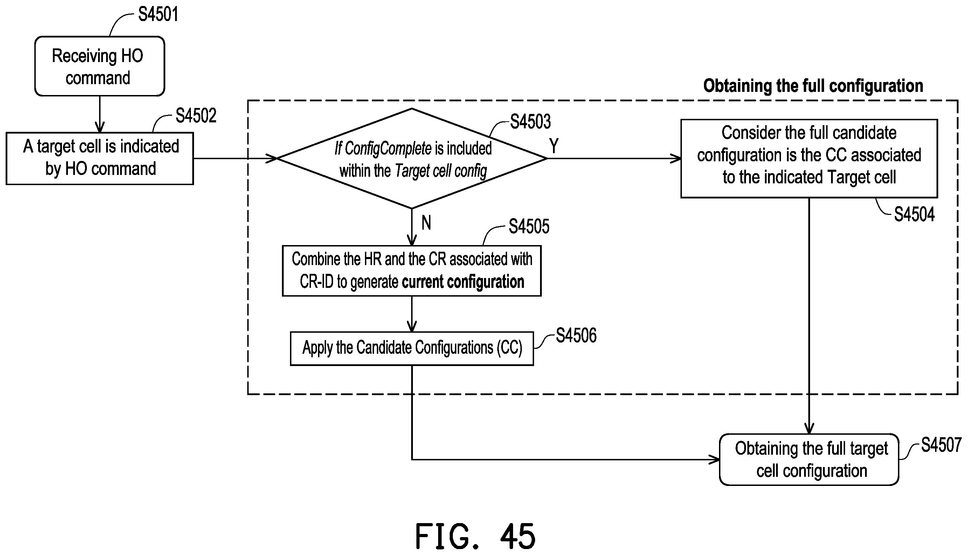

FIG. 45 illustrates a flowchart of generating a full CC according to one embodiment of the present disclosure. In step S4501, the UE may receive a HO command from the network. In step S4502, the UE may determine a target cell indicated by the HO command. In step S4503, the UE may determine whether *ConfigComplete* is included in the target cell config of the HO command. If *ConfigComplete* is included in the target cell config, the UE may execute step S4504. If *ConfigComplete* is not included in the target cell config, the UE may execute step S4505.

In step S4504, the UE may consider the full candidate configuration is the CC associated with the indicated target cell. The UE may generate the full CC by using only the CC. In step S4505, the UE may combine the HR with the CR associated with the CR-ID (e.g., CR-ID corresponding to the indicated target cell) to generate a current configuration. In step S4506, the UE may apply the candidate configuration (CC) corresponding to the indicated target cell. That is, the UE may generate the full CC by combining the current configuration with the CC. In step S4507, the UE may obtain the full candidate configuration from step S4504 or step S4506.

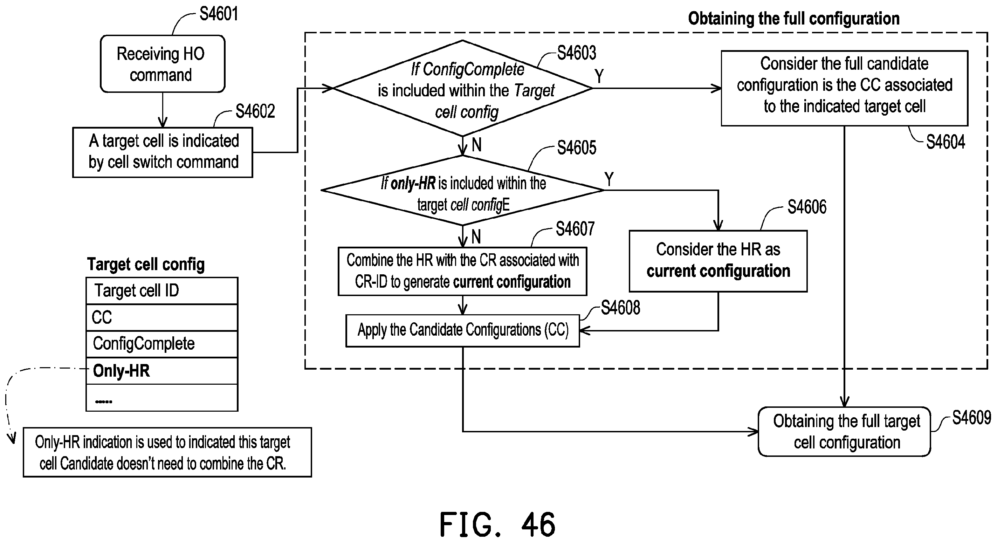

FIG. 46 illustrates a flowchart of generating a full CC according to one embodiment of the present disclosure. In step S4601, the UE may receive a HO command from the network. In step S4602, the UE may determine a target cell indicated by the HO command. In step S4603, the UE may determine whether *ConfigComplete* is included in the target cell config of the HO command. If *ConfigComplete* is included in the target cell config, the UE may execute step S4604. If *ConfigComplete* is not included in the target cell config, the UE may execute step S4605.

In step S4604, the UE may consider the full candidate configuration is the CC associated with the indicated target cell. The UE may generate the full CC by using only the CC. In step S4605, the UE may determine whether *only-HR* indication is included in the target cell config. If *only-HR* is included in the target cell config, the UE may execute step S4606. If *only-HR* is not included in the target cell config, the UE may execute step S4607.

In step S4606, the UE may consider only the HR as a current configuration. In step S4607, the UE may combine the HR with the CR associated with the CR-ID to generate a current configuration. In step S4608, the UE may apply the candidate configuration (CC) corresponding to the indicated target cell. That is, the UE may generate the full CC by combining the current configuration with the CC. In step S4609, the UE may obtain the full candidate configuration from step S4604 or step S4608.

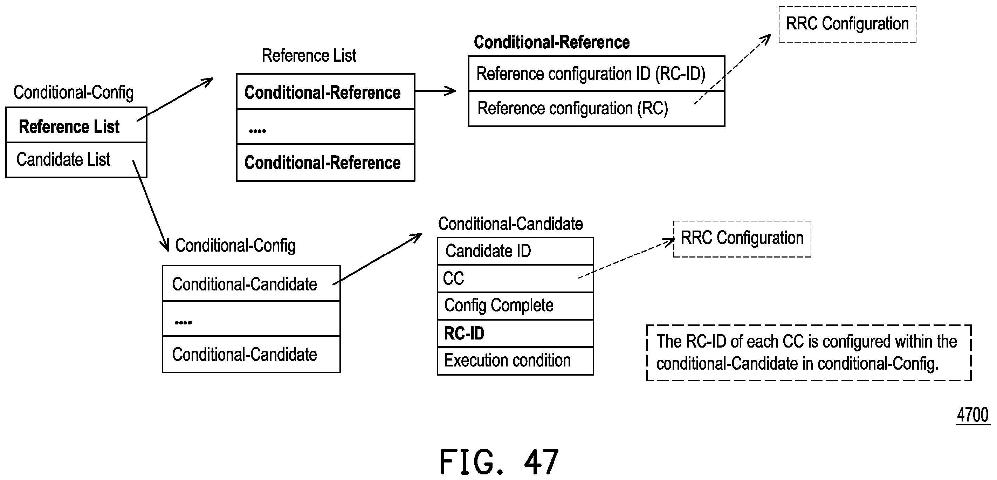

One or more RCs and CCs may be included in a conditional configuration (conditional-config) of CHO, C-LTM, or CPAC. FIG. 47 illustrates a schematic diagram 4700 of conditional-config according to one embodiment of the present disclosure. A conditional-config may include a reference list and a candidate list. The reference list may include one or more conditional-references, and each conditional-reference may include an RC or an RC-ID. The candidate list may include one or more conditional-candidate, wherein each conditional-candidate may include a candidate ID (e.g., candidate cell ID), a CC, a *ConfigComplete,* an RC-ID, or an execution condition.

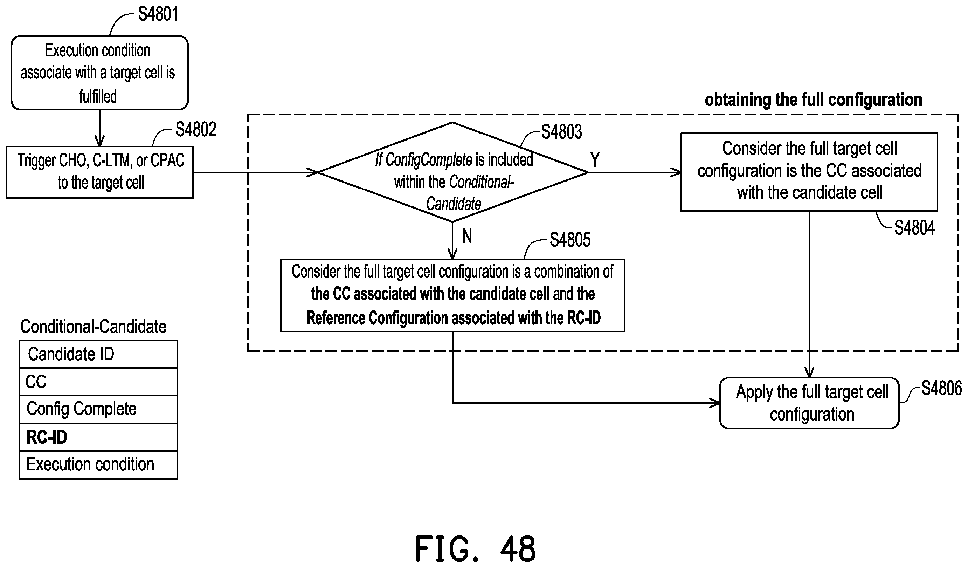

FIG. 48 illustrates a flowchart of generating a full CC according to one embodiment of the present disclosure. In step S4801, the UE may determine that one or more execution conditions associated with a target cell is fulfilled. In step S4802, the UE may trigger CHO, C-LTM, or CPAC to the target cell. In step S4803, the UE may determine whether *ConfigComplete* is included in the conditional-candidate associated with the execution conditions. If *ConfigComplete* is included in the conditional-candidate, the UE may execute step S4804. If *ConfigComplete* is not included in the conditional-candidate, the UE may execute step S4805.

In step S4804, the UE may consider the full target cell configuration is the CC associated with the indicated target cell. The UE may generate the full target cell configuration by using only the CC. In step S4805, the UE may consider the full target cell configuration is a combination of the CC associated with the indicated target cell and the RC associated with the RC-ID. The UE may generate the full target cell configuration by combining the RC with the CC associated with the indicated target cell. In step S4806, the UE may apply the full target cell configuration of the indicated target cell to perform a CHO, C-LTM, or CPAC to the target cell.

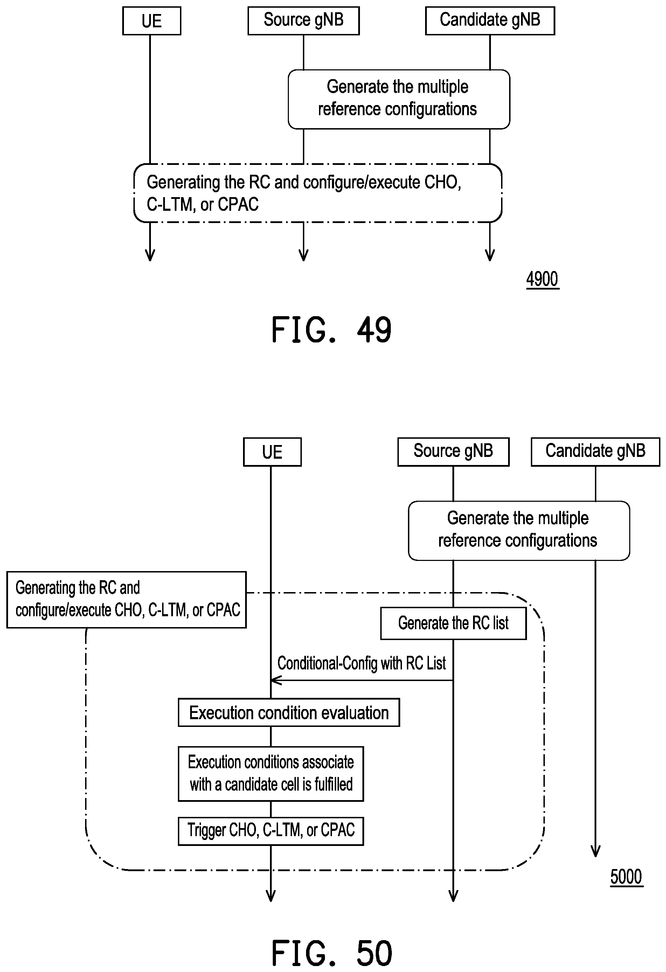

FIG. 49 illustrates a signaling diagram 4900 of generating reference configurations according to one embodiment of the present disclosure. Multiple reference configurations may be generated by a source gNB and one or more candidate gNBs. In one embodiment, the one or more candidate gNBs may generate the multiple RCs and the CCs. In one embodiment, the source gNB may provide information to the one or more candidate gNBs. The one or more candidate gNBs may generate the multiple RCs and the CCs according to the information. On the other hand, the RC for executing CHO, C-LTM, or CPAC may be generated by the UE, the source gNB, or one or more candidate gNBs. In on embodiment, an RC-ID may be included in a conditional-config.

FIG. 50 illustrates a signaling diagram 5000 of triggering CHO, C-LTM, or CPAC according to one embodiment of the present disclosure. Multiple reference configurations may be generated by the source gNB and one or more candidate gNBs. After the multiple reference configurations are generated, the source gNB may generate an RC list, wherein the RC list may include the RCs. The source gNB may configure an RC-ID for each RC within the RC list. The source gNB may configure the CCs into the conditional-config. The source gNB may transmit the conditional-config with the RC list to the UE. The UE or the source gNB may perform an execution conditional evaluation, and determine whether one or more execution conditions associated with a candidate cell are fulfilled. If the execution conditions are fulfilled, the UE may trigger CHO, C-LTM, or CPAC to the candidate cell by using the corresponding full candidate configuration, wherein the full candidate configuration may be generated based on the conditional-config with the RC list.

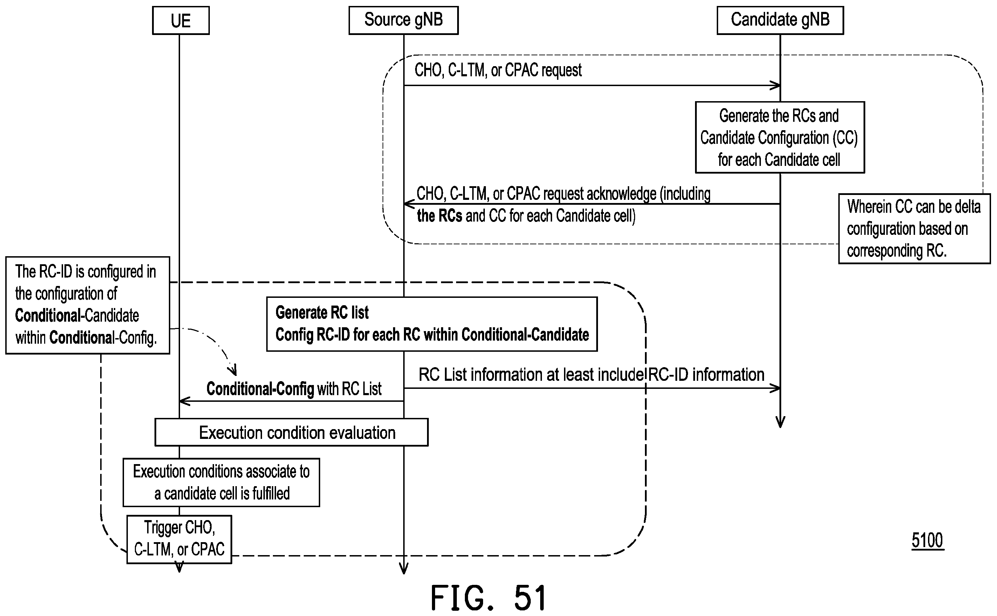

FIG. 51 illustrates a signaling diagram 5100 of generating RCs and CCs according to one embodiment of the present disclosure. The source gNB may transmit a CHO, C-LTM, or CPAC request to one or more candidate gNBs. After receiving the request, the one or more candidate gNBs may generate multiple RCs and a candidate configuration (CC) for each candidate cell. The one or more candidate gNBs may transmit the RCs and the CCs to the source gNB via a CHO, C-LTM, or CPAC request acknowledge. The source gNB may generate an RC list, wherein the RC list may include the RCs. The source gNB may configure an RC-ID for each RC within the conditional-candidate of the conditional-config. The source gNB may transmit the RC list to the one or more candidate gNBs, wherein one or more RC-IDs for the one or more candidate gNBs may be included in the RC list. If a candidate gNB wants to instruct the UE to perform CHO, C-LTM, or CPAC to a target gNB, the candidate gNB may transmit a CHO, C-LTM, or CPAC command with an RC-ID corresponding to the candidate gNB to the UE. On the other hand, the source gNB may configure the CCs into the conditional-candidate, and the source gNB may transmit the conditional-config with the RC list to the UE.

The UE or the source gNB may perform an execution conditional evaluation, and determine whether one or more execution conditions associated with a candidate cell are fulfilled. If the execution conditions are fulfilled, the UE may trigger CHO, C-LTM, or CPAC to the candidate cell by using the corresponding full candidate configuration, wherein the full candidate configuration may be generated based on the conditional-config with the RC list.

In one embodiment, the source gNB may provide information to one or more candidate gNBs. The one or more candidate gNBs may generate the RCs and the CCs based on the information.

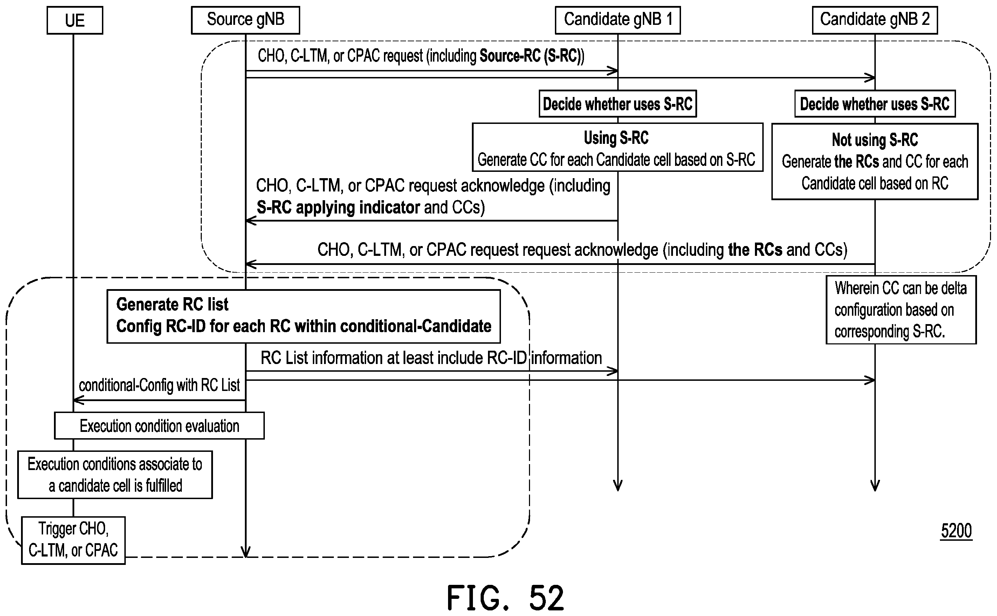

FIG. 52 illustrates a signaling diagram 5200 of generating RCs and CCs according to one embodiment of the present disclosure. The source gNB may transmit a CHO, C-LTM, or CPAC request to one or more candidate gNBs, wherein the CHO, C-LTM, or CPAC request may include a source-RC (S-RC, i.e., reference configuration determined by the source gNB). After receiving the CHO, C-LTM, or CPAC request, the candidate gNB may determine whether to use the S-RC. If the candidate gNB (e.g., candidate gNB 1) determines to use the S-RC, the candidate gNB may generate a CC corresponding to the candidate gNB itself (or generate a CC for each candidate gNB) based on the S-RC, wherein the CC may be a delta configuration with respect to the S-RC. The candidate gNB may transmit a S-RC applying indicator and one or more CCs to the source gNB via the CHO, C-LTM, or CPAC request acknowledge, wherein the S-RC applying indicator may indicate that the S-RC has been used to generate the CCs. If the candidate gNB (e.g., candidate gNB 2) determines not to use the S-RC, the candidate gNB may generate multiple reference configurations, and the candidate gNB may generate a CC corresponding to the candidate gNB itself (or generate a CC for each candidate gNB) based on the multiple RCs, wherein the CC may be a delta configuration with respect to the multiple RCs. The candidate gNB may transmit the multiple RCs and one or more CCs to the source gNB via the CHO, C-LTM, or CPAC request acknowledge.

The source gNB may generate an RC list, wherein the RC list may include the S-RC or the multiple RCs. The source gNB may transmit the RC list to the one or more candidate gNBs, wherein one or more RC-IDs for the one or more candidate gNBs may be included in the RC list. If a candidate gNB wants to instruct the UE to perform CHO, C-LTM, or CPAC to another candidate gNB, the candidate gNB may transmit a CHO, C-LTM, or CPAC command with an RC-ID corresponding to another candidate gNB to the UE. On the other hand, the source gNB may configure an RC-ID for each RC within the conditional-candidate. The source gNB may configure the CCs into the conditional-config, and the source gNB may transmit the conditional-config with the RC list to the UE.

The UE or the source gNB may perform an execution conditional evaluation, and determine whether one or more execution conditions associated with a candidate cell are fulfilled. If the execution conditions are fulfilled, the UE may trigger CHO, C-LTM, or CPAC to the candidate cell by using the corresponding full candidate configuration, wherein the full candidate configuration may be generated based on the conditional-config with the RC list.

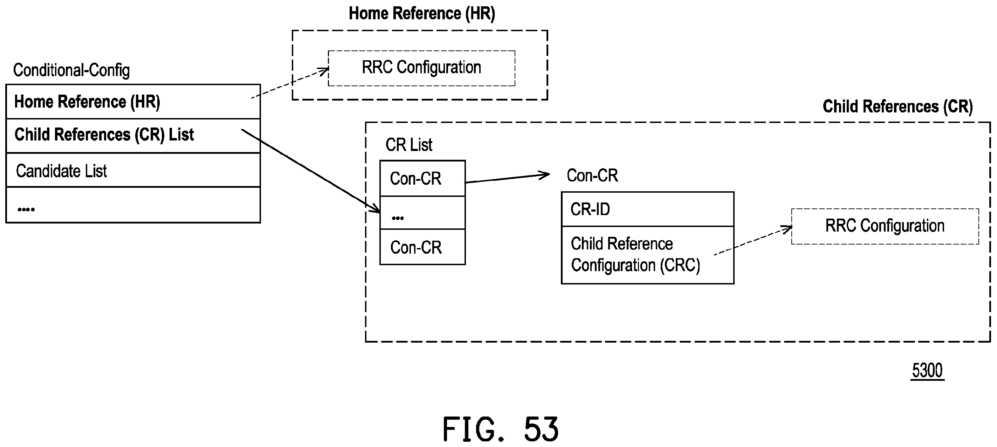

FIG. 53 illustrates a schematic diagram 5300 of conditional-config according to one embodiment of the present disclosure. A conditional-config may include a home reference (HR) and a child reference (CR) list. The CR list may include one or more conditional-CRs (con-CRs), wherein each con-CR may include an CR-ID and a child reference configuration (CRC) corresponding to the CR-ID. The HR or the CR may include RRC configuration such as measurement configuration, mobility control, radio resource configuration (including RB, MAC main configuration, or physical channel configuration), or security configuration.

In one embodiment, if a configuration parameter is the same in each candidate cell (the configuration parameter is the same among N candidate cells, where N is a positive integer), the configuration parameter may be carried by a HR. If a configuration parameter is the same across a few candidate cells (the configuration parameter is the same among M candidate cells, where M is a positive integer less than N), the configuration parameter may be carried by a CR. If a configuration parameter is different in each candidate cell, the configuration parameter may be carried by a CC for each candidate cell. A full configuration can be generated by combining the HR, the CR, and the CC.

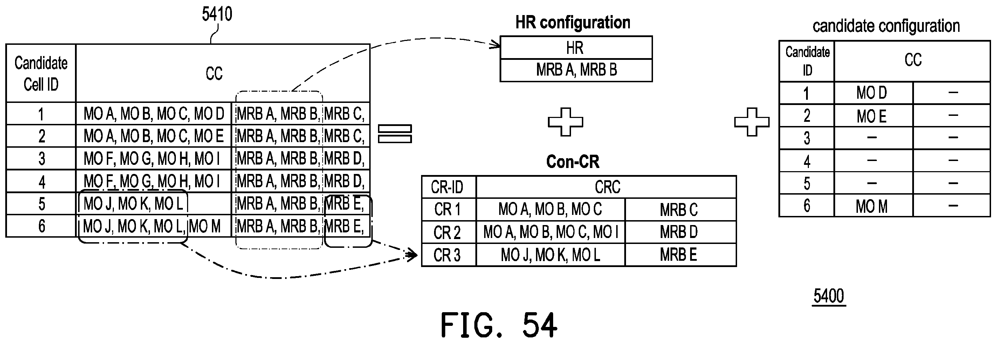

FIG. 54 illustrates a schematic diagram 5400 of configuration scheme according to one embodiment of the present disclosure. Assume that the candidate cell 1-6 want to configure MOs and MRBs as table 5410. That is, the complete configuration of candidate cell 1 includes MO A, MO B, MO C, MO D, MRB A, MRB B, and MRB C. The complete configuration of candidate cell 2 includes MO A, MO B, MO C, MO E, MRB A, MRB B, and MRB C. The complete configuration of the candidate cell 3 includes MO F, MO G, MO H, MO I, MRB A, MRB B, and MRB D. The complete configuration of the candidate cell 4 includes MO F, MO G, MO H, MO I MRB A, MRB B, and MRB D. The complete configuration of the candidate cell 5 includes MO J, MO K, MO L MRB A, MRB B, and MRB E. The complete configuration of the candidate cell 6 includes MO J, MO K, MO L, MO M, MRB A, MRB B, and MRB E.

Table 5410 may be divided into a HR, one or more CRs, and a CC for each candidate cell. Specifically, since MRB A and MRB B are required by all of the candidate cells, MRB A and MRB B may be allocated in the HR configuration, and MRB A and MRB B may be removed from table 5410. Since MO A, MO B, MO C, and MRB C are required by the candidate cell 1 and the candidate cell 2, MO A, MO B, MO C, and MRB C may be allocated in the CR (i.e., CR 1) corresponding to the candidate cell 1 and the candidate cell 2. Since MO F, MO G, MO G, MO I, and MRB D are required by the candidate cell 3 and the candidate cell 4, MO F, MO G, MO G, MO I, and MRB D may be allocated in the CR (i.e., CR 2) corresponding to the candidate cell 3 and the candidate cell 4. Since MO J, MO K, MO L, and MRB E are required by the candidate cell 5 and the candidate cell 6, MO J, MO K, MO L, and MRB E may be allocated in the CR (i.e., CR 3) corresponding to the candidate cell 5 and the candidate cell 6. Since MO D, MO E, and MO M are only required by the candidate cell 1, the candidate cell 2, and the candidate cell 6 respectively, MO D, MO E, and MO M may be allocated to the CC corresponding to the candidate cell 1, the CC corresponding to the candidate cell 2, and the CC corresponding to the candidate cell 6 respectively.

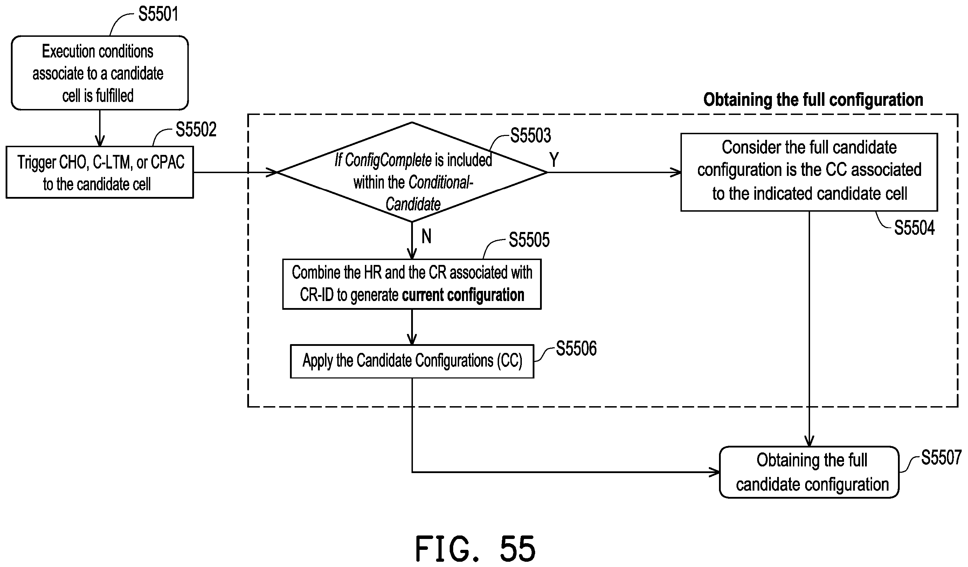

FIG. 55 illustrates a flowchart of generating a full CC according to one embodiment of the present disclosure. In step S5501, the UE may determine that one or more execution conditions associated with a candidate cell is fulfilled. In step S5502, the UE may trigger CHO, C-LTM, or CPAC to the candidate cell. In step S5503, the UE may determine whether *ConfigComplete* is included in the conditional-candidate of the conditional-config. If *ConfigComplete* is included in the conditional-candidate, the UE may execute step S5504. If *ConfigComplete* is not included in the conditional candidate, the UE may execute step S5505.

In step S5504, the UE may consider the full candidate configuration is the CC associated with the indicated candidate cell. The UE may generate the full CC by using only the CC. In step S5505, the UE may combine the HR with the CR associated with the CR-ID (e.g., CR-ID corresponding to the indicated candidate cell) to generate a current configuration. In step S5506, the UE may apply the candidate configuration (CC) corresponding to the indicated candidate cell. That is, the UE may generate the full CC by combining the current configuration with the CC. In step S5507, the UE may obtain the full candidate configuration from step S5504 or step S5506.

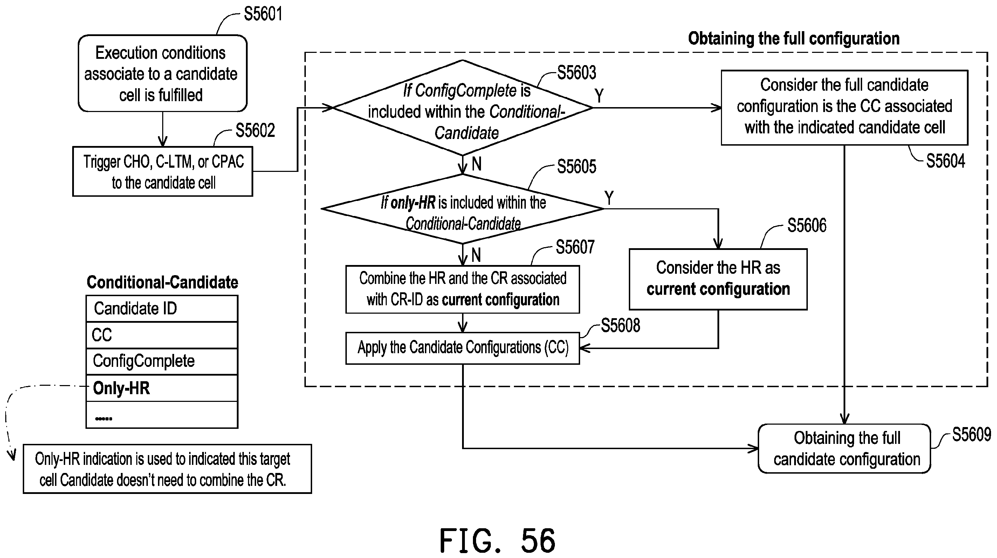

FIG. 56 illustrates a flowchart of generating a full CC according to one embodiment of the present disclosure. In step S5601, the UE may determine that one or more execution conditions associated with a candidate cell is fulfilled. In step S5602, the UE may trigger CHO, C-LTM, or CPAC to the candidate cell. In step S5603, the UE may determine whether *ConfigComplete* is included in the conditional-candidate of the conditional-config. If *ConfigComplete* is included in the conditional-candidate, the UE may execute step S5604. If *ConfigComplete* is not included in the conditional candidate, the UE may execute step S5605.

In step S5604, the UE may consider the full candidate configuration is the CC associated with the indicated candidate cell. The UE may generate the full CC by using only the CC. In step S5605, the UE may determine whether *only-HR* indication is included in the conditional-candidate. If *only-HR* is included in the conditional-candidate, the UE may execute step S5606. If *only-HR* is not included in the conditional-candidate, the UE may execute step S5607.

In step S5606, the UE may consider only the HR as a current configuration. In step S5607, the UE may combine the HR with the CR associated with the CR-ID to generate a current configuration. In step S5608, the UE may apply the candidate configuration (CC) corresponding to the indicated candidate cell. That is, the UE may generate the full CC by combining the current configuration with the CC. In step S5609, the UE may obtain the full candidate configuration from step S5604 or step S5608.

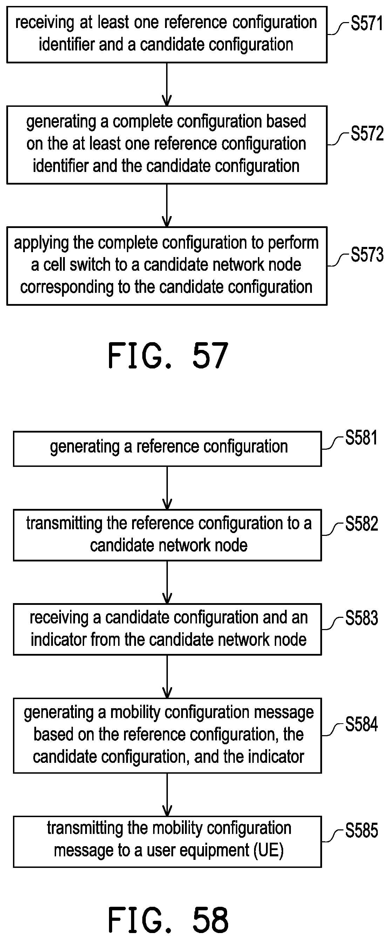

FIG. 57 illustrates a flowchart or a method of mobility management according to one embodiment of the present disclosure, wherein the method may be implemented by a wireless communication device such as a UE. In step S571, receiving at least one reference configuration identifier and a candidate configuration. In step S572, generating a complete configuration based on the at least one reference configuration identifier and the candidate configuration. In step S573, applying the complete configuration to perform a cell switch to a candidate network node corresponding to the candidate configuration.

FIG. 58 illustrates a flowchart of a method of mobility management according to one embodiment of the present disclosure, wherein the method may be implemented by a wireless communication device such a network node. In step S581, generating a reference configuration. In step S582, transmitting the reference configuration to a candidate network node. In step S583, receiving a candidate configuration and an indicator from the candidate network node. In step S584, generating a mobility configuration message based on the reference configuration, the candidate configuration, and the indicator. In step S585, transmitting the mobility configuration message to a user equipment (UE).

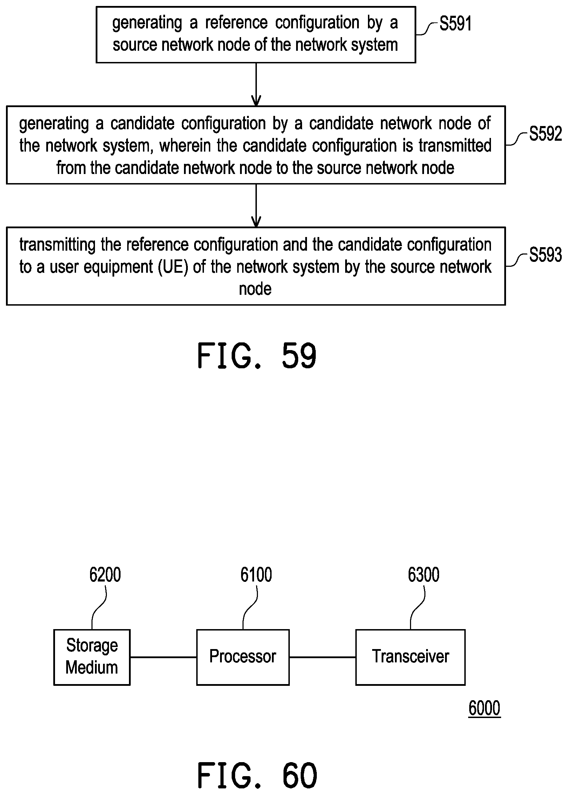

FIG. 59 illustrates a flowchart of a method of mobility management according to one embodiment of the present disclosure, wherein the method may be implemented by a network system. In step S591, generating a reference configuration by a source network node of the network system. In step S592, generating a candidate configuration by a candidate network node of the network system, wherein the candidate configuration is transmitted from the candidate network node to the source network node. In step S593, transmitting the reference configuration and the candidate configuration to a user equipment (UE) of the network system by the source network node.

FIG. 60 illustrates a schematic diagram of a communication device 6000 according to one embodiment of the present disclosure, wherein the communication device 6000 may implement the methods described in figures 1-59 as well as their exemplary embodiments and alternative variations. The communication device 6000 may include a processor 6100, a storage medium 6200, and a transceiver 6300. The processor 6100 is coupled to the storage medium 6200 and the transceiver 6300.

The processor 6100 could be implemented by using programmable units such as a microprocessor, a micro-controller, a digital signal processor (DSP), a field programmable gate array (FPGA), etc. the functions of the processor 6100 may also be implemented with separate electronic devices or ICs. It should be noted that the functions of processor 6100 may be implemented with either hardware or software.

The storage medium 6200 may be, for example, any type of fixed or removable random access memory (RAM), a read-only memory (ROM), a flash memory, a hard disc drive (HDD), a solid state drive (SSD) or similar element, or a combination thereof, configured to record a plurality of modules or various applications executable by the processor 6100.

The transceiver 6300 may be configured to transmit and receive signals respectively in the radio frequency. The transceiver 6300 may also perform operations such as low noise amplifying, impedance matching, frequency mixing, up or down frequency conversion, filtering, amplifying, and so forth. The transceiver 6300 may include one or more digital-to-analog (D/A) converters or analog-to-digital (A/D) converters which are configured to convert from an analog signal format to a digital signal format during uplink signal processing and from a digital signal format to an analog signal format during downlink signal processing. The transceiver 6300 may include an antenna array which may include one or more antennas to transmit and receive omnidirectional antenna beams or directional antenna beams.

The disclosure provides a method for the network system to improve the signaling efficiency for inter-CU LTM. Multiple reference configurations can be introduced to the network system. For example, the UE may be configured with multiple reference configurations. One or more measurement objectives shared by multiple cells may be included in a reference configuration. After the UE receives an indication (e.g., identifier of a reference configuration), the UE may select a reference configuration based on the indication and combine the reference configuration with other information to generate a complete configuration for performing a cell switch to a candidate network node.

## Claims

1. A method of mobility management suitable for a user equipment, UE (6000), comprising:
receiving at least one reference configuration identifier and a candidate configuration;
generating a complete configuration based on the at least one reference configuration identifier and the candidate configuration; and
applying the complete configuration to perform a cell switch to a candidate network node corresponding to the candidate configuration.

2. The method according to claim 1, wherein the candidate configuration comprises a delta configuration with respect to the at least one reference configuration identifier.

3. The method according to claim 2, further comprising:
obtaining a reference configuration corresponding to the at least one reference configuration identifier;
considering the reference configuration is a current UE configuration; and
applying the delta configuration to obtain the complete configuration.

4. The method according to claim 1, wherein the complete configuration comprises at least one of the following: a measurement configuration, mobility control information, a radio resource control, RRC, configuration, a packet data convergence protocol, PDCP, configuration, a radio link control, RLC, configuration, a medium access control, MAC, configuration, a physical layer, PHY, configuration, or a security configuration.

5. The method according to claim 1, wherein the at least one reference configuration identifier is received via a mobility configuration message or a cell switch command corresponding to the candidate network node.

6. The method according to claim 1, wherein the at least one reference configuration identifier corresponds to a home reference configuration associated with a plurality of candidate network nodes of the UE (6000) and a candidate reference configuration associated with a part of the plurality of candidate network nodes, wherein the complete configuration is generated by combining the home reference configuration, the candidate reference configuration, and the candidate configuration.

7. The method according to claim 1, further comprising:
selecting a reference configuration identifier corresponding to the candidate network node from the at least one reference configuration identifier, wherein the complete configuration is generated based on the reference configuration identifier and the candidate configuration.

8. The method according to claim 7, further comprising:
receiving a configuration and determining whether a parameter is included in the configuration; and
in response to the parameter being included in the configuration, generating the complete configuration based on the reference configuration identifier and the candidate configuration.

9. The method according to claim 1, wherein the complete configuration is applied by the UE (6000) in response to a conditional trigger event associated with a mobility operation, wherein the conditional trigger event comprises at least one of the following: a conditional handover, CHO, a conditional lower-layer triggered mobility, C-LTM, or a conditional policy-assisted configuration, CPAC.

10. The method according to claim 1, wherein the step of generating the complete configuration based on the at least one reference configuration identifier and the candidate configuration comprises:
obtaining a reference configuration corresponding to the at least one reference configuration identifier, wherein the reference configuration is pre-configured to the UE (6000); and
combining the reference configuration and the candidate configuration to generate the complete configuration.

11. The method according to claim 1, wherein the at least one reference configuration identifier and the candidate configuration are received via a lower-layer triggered configuration or a handover configuration.

12. A method of mobility management suitable for a source network node (6000), comprising:
generating a reference configuration;
transmitting the reference configuration to a candidate network node;
receiving a candidate configuration and an indicator from the candidate network node;
generating a mobility configuration message based on the reference configuration, the candidate configuration, and the indicator; and
transmitting the mobility configuration message to a user equipment, UE.

13. A method of mobility management suitable for a network system, comprising:
generating a reference configuration by a source network node of the network system;
generating a candidate configuration by a candidate network node of the network system, wherein the candidate configuration is transmitted from the candidate network node to the source network node; and
transmitting the reference configuration and the candidate configuration to a user equipment, UE, of the network system by the source network node.

14. The method according to claim 13, further comprising:
combining the reference configuration and the candidate configuration to generate a complete configuration by the UE; and
applying the complete configuration to perform a cell switch to the candidate network node by the UE.

15. The method according to claim 13, wherein the candidate configuration is generated by the candidate network node based on the reference configuration.
